# EUROPEAN PATENT SPECIFICATION

(11) **EP 3 634 080 B1**
(45) Date of publication and mention of the grant of the patent: **04.05.2022**
(21) Application number: 18814410.9
(22) Date of filing: 01.06.2018
(51) Int. Cl.: H04W 76/22, H04W 76/38, H04W 36/00, H04W 80/10, H04W 88/14, H04W 92/24, H04W 8/08

(54) **SESSION PROCESSING METHOD, APPARATUS AND SYSTEM**
SITZUNGSVERARBEITUNGSVERFAHREN, -VORRICHTUNG UND -SYSTEM
SYSTÈME, APPAREIL ET PROCÉDÉ DE TRAITEMENT DE SESSION

(30) Priority: 08.06.2017 CN 201710428385; 16.06.2017 CN 201710459734
(43) Date of publication of application: 08.04.2020
(73) Proprietor: Huawei Technologies Co., Ltd., Longgang District Shenzhen, Guangdong 518129 (CN)
(72) Inventor: HU, Yong, Shenzhen Guangdong 518129 (CN); SHI, Shufeng, Shenzhen Guangdong 518129 (CN)
(74) Representative: Epping - Hermann - Fischer
(86) International application number: PCT/CN2018/089559
(87) International publication number: WO 2018/223900

(56) References cited:
- WO-A1-2019/223702
- CN-A- 101 686 563
- US-A1- 2017 070 892
- "Technical Specification Group Services and System Aspects; System Architecture for the 5G System; Stage 2 (Release 15)", 3GPP TS 23.501, 1 May 2017 (2017-05-01), pages 1-145, XP055565011,
- QUALCOMM INCORPORATED et al.: "TS 23.501: PDU Sessions Handling for LADNs", SA WG2 Meeting #121 S 2-173110, 19 May 2017 (2017-05-19), pages 1-5, XP051281222,

## Description

This application claims priority to Chinese Application No. 201710428385.5, filed on June 8, 2017 and entitled "SESSION PROCESSING METHOD, APPARATUS, AND SYSTEM", and Chinese Application No. 201710459734.X, filed on June 16, 2017 and entitled "SESSION PROCESSING METHOD, APPARATUS, AND SYSTEM".

### TECHNICAL FIELD

This disclosure relates to the field of wireless communications technologies, and in particular, to a session processing method, an apparatus, and a system.

### BACKGROUND

A local area data network (Local Area Data Network, LADN) is a network covering a specific local area. For example, the LADN may be a network covering a place such as a corporate campus, a campus, an airport, a railway station, a shopping mall, or a stadium. User equipment (User Equipment, UE) accesses a local gateway through radio access, to directly access an LADN corresponding to the local gateway, and the UE can obtain, from the LADN, data frequently used by the UE, without using a network different from the LADN. This reduces a delay in obtaining data, and decreases bandwidth that is occupied because the UE needs to frequently request to obtain data from the network different from the LADN.

Document 3GPP TS 23.501 V0.5.0 (2017-05) relates to "3rd Generation Partnership Project; Technical Specification Group Services and System Aspects; and System Architecture for the 5G System" defined at Stage 2 system architecture for the 5G System providing data connectivity and services. This document covers both roaming and non-roaming scenarios in all aspects, including interworking between 5GS and EPS, mobility within 5GS, policy control and charging, and authentication. According to this document, when a PDU session is established, Session Management Function, SMF, may determine an area of interest, e.g. based on UPF service area. When the AMF detects that the UE has moved out of that area, it needs to notify SMF of the UE's new location. The SMF subscribes to "UE mobility event Notification" service provided by AMF. During subscription, SMF provides the area of interest to AMF. The AMF sends UE's new location to SMF when AMF detects that the UE has moved out of that area. Upon reception of new UE location notification from AMF, the SMF determines how to deal with the PDU session, e.g. relocate UPF. The SMF may determine a new area of interest, and send a new subscription to the AMF with the new area of interest. The SMF unsubscribes to "UE mobility event Notification" service when PDU session is released. Document "TS 23.501: PDU sessions handling for LADNs", Qualcomm Incorporated, relates to 5G System providing support for UEs to be made aware of the availability of a local area Data Network (LADN) based on the UE location. The 5G Core Network notifies the UE of the information for the specific LADNs which are available to the UE, based on the operator's policy and subscription information. The LADN Information provided to the UE consists of LADN DNN and LADN service area information. The LADN service area information may be provided for a set of Tracking Areas. The AMF does not create Registration Area based on the availability of LADNs. When the UE performs a successful registration procedure, the AMF may provide to the UE, based on local configuration information (e.g. via OAM), UE subscription information, or policies provided by PCF, the LADN Information for the LADNs available to the UE in that RA in the (Re) registration response message.

Based on the LADN information in the UE, the UE may request a PDU session establishment for an available LADN. The UE should not request a PDU session for a LADN when the UE is located outside the area of availability of the LADN, and the network shall reject any such requests. When the AMF detects that the UE has moved out of the area of availability of the LADN, the AMF informs the SMF which may, based on network policies, either: disconnect the PDU session, or release the user plane resources for the PDU session and maintain the PDU session and start a timer for the disconnection of the PDU session to cater for the case that the UE does not return to the area of availability of the LADN. If at the expiration of the timer the network has not detected that the UE is in the area of availability of the LADN, the network disconnects the PDU session. Upon leaving the area of availability of the LADN, the UE shall consider the user plane for the LADN PDU session released, unless the UE receives an explicit PDU session release request from the network, and start a UE timer, shorter than the network timer, for the implicit disconnection of the PDU session. The AMF shall reject service requests from the UE outside the area of availability of the LADN, and shall not perform network triggered service request for downlink data for the PDU session. The AMF shall page the CM-IDLE UE or send a Network Triggered Service Request to the CM-CONNECTED UE, when the AMF receives a request from the SMF for resource establishment for a PDU session corresponding to a LADN, only if the UE is in the area of availability of the LADN.

In a prior-art technical solution of connecting UE to an LADN, a session management functional entity delivers, to the UE based on a location of the UE, configuration information of the LADN and information about an area covered by the LADN; and when determining, based on the received information about the area covered by the LADN, that the UE has entered the area covered by the LADN, the UE connects to the LADN based on the received configuration information of the LADN, and requests to establish an LADN session for data transmission. After the UE leaves the area covered by the LADN, there is no method for processing the LADN session established for the UE in the prior art.

In conclusion, for an LADN session established after UE enters an area covered by an LADN, a technical solution of processing the LADN session after the UE leaves the area covered by the LADN needs to be designed urgently.

### SUMMARY

This invention is embodied in the session processing method of independent claim 1, in the corresponding apparatus of independent claim 9 and in the session processing system of independent claim 10. In the following, parts of the description and drawings referring to implementations which are not covered by the claims are not presented as embodiments of the invention, but as examples useful for understanding the invention.

### BRIEF DESCRIPTION OF DRAWINGS

FIG. 1 is a schematic architecture diagram of a session processing system according to an implementation of this disclosure;
FIG. 2 is a schematic architecture diagram of a 5G system according to an implementation of this disclosure;
FIG. 3 is a schematic flowchart of a session processing method according to an implementation of this disclosure;
FIG. 4A and FIG. 4B are a schematic flowchart of a first method for processing an LADN session in a 5G system according to an implementation of this disclosure;
FIG. 5A and FIG. 5B are a schematic flowchart of a second method for processing an LADN session in a 5G system according to an implementation of this disclosure;
FIG. 6 is a schematic flowchart of a third method for processing an LADN session in a 5G system according to an implementation of this disclosure;
FIG. 7 is a schematic flowchart of a fourth method for processing an LADN session in a 5G system according to an implementation of this disclosure;
FIG. 8 is a schematic structural diagram of a first session management functional entity according to an implementation of this disclosure;
FIG. 9 is a schematic structural diagram of a second session management functional entity according to an implementation of this disclosure;
FIG. 10 is a schematic architecture diagram of another session processing system according to an implementation of this disclosure;
FIG. 11 is a schematic flowchart of another session processing method according to an implementation of this disclosure;
FIG. 12 is a schematic flowchart of a fifth method for processing an LADN session in a 5G system according to an implementation of this disclosure;
FIG. 13 is a schematic flowchart of a sixth method for processing an LADN session in a 5G system according to an implementation of this disclosure;
FIG. 14A, FIG. 14B, and FIG. 14C are a schematic flowchart of a seventh method for processing an LADN session in a 5G system according to an implementation of this disclosure;
FIG. 15 is a schematic structural diagram of a third session management functional entity according to an implementation of this disclosure; and
FIG. 16 is a schematic structural diagram of a fourth session management functional entity according to an implementation of this disclosure.

### DESCRIPTION OF EMBODIMENTS

The embodiments of this disclosure provide a session processing method and a session processing system, wherein after UE leaves an area covered by an LADN, an LADN session established before the UE leaves the area covered by the LADN. The method, the apparatus, and the system are based on a same concept. Because problem-resolving principles of the method, the apparatus, and the system are similar, mutual reference may be made between implementation of the method, the apparatus, and the system, and repeated descriptions are omitted.

Technical solutions provided in the implementations of this disclosure are applicable to a session processing scenario specific to an LADN. The LADN is a network covering a specific local area. For example, the LADN may be a network covering a place such as a campus or a station. UE accesses a user plane node of an LADN by using a radio access network, to directly access the LADN corresponding to the user plane node of the LADN, and the UE can obtain, from the LADN, data frequently used by the UE, without using a network different from the LADN. This reduces a delay in obtaining data, and decreases bandwidth that is occupied because the UE needs to frequently request to obtain data from the network different from the LADN. A process of connecting the UE to the LADN includes: After the UE enters an area covered by the LADN, a session management functional entity in a control plane node delivers, to the UE based on a location of the UE, configuration information of the LADN and information about the area covered by the LADN; and after determining, based on the received information about the area covered by the LADN, that the UE has entered the area covered by the LADN, the UE connects to the LADN based on the received configuration information of the LADN. After the UE is connected to the LADN, the network establishes an LADN session for the UE, where the LADN session is a session used by the UE to perform data transmission in the area covered by the LADN. The LADN session is classified into an LADN session in an active state and an LADN session in an inactive state. The LADN session in the active state occupies a downlink tunnel resource and an air interface resource, and the UE can perform, by using the LADN session in the active state, data transmission in the area covered by the LADN. The LADN session in the inactive state does not occupy the downlink tunnel resource or the air interface resource, and the LADN session in the inactive state cannot be used by the UE to perform data transmission in the area covered by the LADN.

The invention consists in a session processing method, comprising: sending (1101), by a session management functional entity (102), an event subscription request to a mobility management functional entity (101) to subscribe an event, wherein the event subscription request comprises an identifier of a user equipment, UE, and an identifier of a local area data network, LADN, wherein the event comprises that the UE leaves an area covered by the LADN, and wherein the identifier of the LADN is a local data network name; receiving (1102), by the session management functional entity (102) from the mobility management functional entity (101), a first notification message for notifying that the UE has left the area covered by the LADN; and triggering (1103), by the session management functional entity (102), a first session operation based on the first notification message, wherein the first session operation comprises releasing an LADN session or deactivating an LADN session, and the LADN session is a session used by the UE to perform data transmission in the area covered by the LADN, if the first session operation comprises deactivating the LADN session, the triggering, by the session management functional entity (102), a first session operation based on the first notification message comprises: sending, by the session management functional entity (102) to the mobility management functional entity (101), a message for instructing to release an air interface resource of the LADN session. The invention further comprises a session management functional entity (102), configured to perform the previous method. Finally, the invention consists in a session processing system, wherein the system comprises a session management functional entity (102) and a mobility management functional entity (101), wherein the session management functional entity (102) is configured to send an event subscription request to the mobility management functional entity (101) to subscribe an event, wherein the event subscription request comprises an identifier of a user equipment, UE, and an identifier of a local area data network, LADN, wherein the event comprises that the UE leaves an area covered by the LADN, and wherein the identifier of the LADN is a local data network name; the mobility management functional entity (101) is configured to: receive the event subscription request sent by the session management functional entity (102); and if determining that the UE has left the area covered by the LADN, send, to the session management functional entity (102), a first notification message for notifying that the UE has left the area covered by the LADN; and the session management functional entity (102) is further configured to: receive the first notification message from the mobility management functional entity (101), and trigger a first session operation based on the first notification message, wherein the first session operation comprises releasing an LADN session or deactivating an LADN session, and the LADN session is a session used by the UE to perform data transmission in the area covered by the LADN, wherein the session management functional entity (102) is configured to trigger a first session operation based on the first notification message, and is configured to: if the first session operation comprises deactivating the LADN session, send, to the mobility management functional entity (101), a message for instructing to release an air interface resource of the LADN session.

The following part of the description does not describe part of the claimed invention.

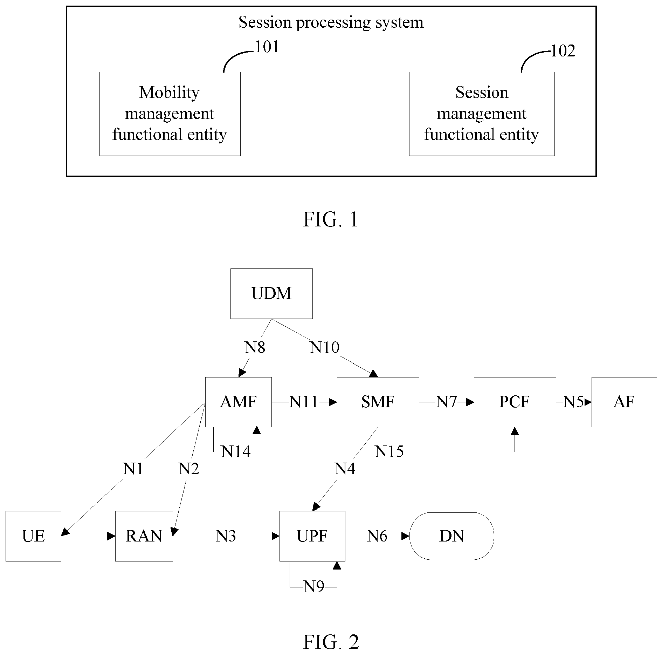

An implementation of this disclosure provides a session processing system. An architecture of the system may be shown in FIG. 1, including a mobility management functional entity 101 and a session management functional entity 102. An operating principle of the system is as follows:
The mobility management functional entity 101 sends indication information to the session management functional entity 102. After receiving the indication information sent by the mobility management functional entity 101, the session management functional entity 102 determines, based on a UE location indicated by the indication information, that UE has left an area covered by an LADN. When determining that the UE has left the area covered by the LADN, the session management functional entity 102 triggers deactivation of an LADN session, and determines, within preset duration and depending on whether the UE re-enters the area covered by the LADN, whether to release the LADN session. If the UE does not re-enter, within the preset duration, the area covered by the LADN, the session management functional entity 102 releases the LADN session. This can prevent the following problem: If the LADN session of the UE is not released in a long time after the UE leaves the area covered by the LADN, the LADN session occupies a network resource for a long time, causing a waste of the resource. If the UE re-enters, within the preset duration, the area covered by the LADN, the session management functional entity 102 determines not to release the LADN session. This can prevent the following problem: If the LADN session of the UE is released immediately after the UE leaves the area covered by the LADN, when the UE re-enters the area covered by the LADN, an LADN session needs to be established for the UE again; and repeated establishment of an LADN session causes an increase in signaling overheads.

The indication information is used to indicate the location of the UE, and the indication information may include location information of the UE or information for indicating that the UE has left the area covered by the LADN. If the indication information includes the location information of the UE, the session management functional entity 102 determines, based on the location information of the UE included in the indication information and pre-stored information about the area covered by the LADN that the UE has left the area covered by the LADN. If the indication information includes the information for indicating that the UE has left the area covered by the LADN, the mobility management functional entity 101 determines, based on the location information of the UE and pre-stored information about the area covered by the LADN, that the UE has left the area covered by the LADN, and sends, to the session management functional entity 102, the indication information including the information for indicating that the UE has left the area covered by the LADN.

According to the session processing system in this disclosure, after the UE leaves the area covered by the LADN, the LADN session established before the UE leaves the area covered by the LADN can be processed, facilitating proper utilization of the network resource occupied by the LADN session, and improving network resource utilization.

The technical solution provided in this implementation of this disclosure is applicable to a plurality of systems, including a 5G system. For example, the applicable systems may be a Global System for Mobile Communications (Global System for Mobile Communications, GSM) system, a Code Division Multiple Access (Code Division Multiple Access, CDMA) system, a Wideband Code Division Multiple Access (Wideband Code Division Multiple Access, WCDMA) system, a general packet radio service (General Packet Radio Service, GPRS) system, a Long Term Evolution (Long Term Evolution, LTE) system, an LTE frequency division duplex (Frequency Division Duplex, FDD) system, an LTE time division duplex (Time Division Duplex, TDD) system, a Universal Mobile Telecommunications System (Universal Mobile Telecommunication System, UMTS), a Worldwide Interoperability for Microwave Access (Worldwide Interoperability for Microwave Access, WiMAX) system, the 5G system, and the like. The plurality of systems each include a session management functional entity and a mobility management functional entity. Session management functional entities and mobility management functional entities in different systems may correspondingly have different names. For example, in the 5G system, a name of a session management functional entity is SMF (Session Management Function), and a name of a mobility management functional entity is AMF (Access and Mobility Management Function).

A 5G system shown in FIG. 2 is used as an example. The 5G system includes an SMF, an AMF, a radio access network (Radio Access Network, RAN), and a user plane functional entity (User Plane Function, UPF), and may further include a policy control functional entity (Policy Control Function, PCF), an application functional entity (Application Function, AF), a data network (Data Network, DN), a united data management functional entity (United Data Management, UDM), and the like. The SMF is mainly configured to trigger and control session establishment, release, and update in the 5G system. The AMF may receive UE signaling through an N1 interface and receive RAN signaling through an N2 interface, to complete UE registration, signaling forwarding, and UE mobility management. The SMF and the AMF are control plane nodes. The N1 interface is a signaling interface between UE and the mobility management functional entity, and the N2 interface is a signaling interface between the RAN and the mobility management functional entity. The UPF is a user plane node, which can implement a user plane gateway function, and is mainly configured to control implementation of specific functions such as data forwarding, listening, and charging on a user plane. The RAN can connect the UE to a core network in a wireless manner. The RAN may be ground infrastructure that provides management tasks for users in a specific range, including access, roaming, connecting to a public switched telephone network, and connecting to a network. In the 5G system shown in FIG. 2, the UE may connect, by using the UPF, to the DN connected to the UPF. If the UPF is a user plane node of another network different from an LADN, the DN connected to the UPF is the other network different from the LADN. If the UPF is a user plane node of an LADN, the DN connected to the UPF is the LADN.

The UE in this implementation of this disclosure may be a device that provides voice and/or data connectivity for a user, a handheld device with a wireless connection function, or another processing device connected to a wireless modem. The UE may communicate with one or more core networks by using a RAN. The wireless terminal device may be a mobile terminal device such as a mobile phone (also referred to as a "cellular" phone) or a computer provided with a mobile terminal device. For example, the wireless terminal device may be a portable, pocket-sized, handheld, computer built-in, or in-vehicle mobile apparatus, which exchanges voice and/or data with the radio access network. For example, the wireless terminal device is a device such as a personal communication service (Personal Communication Service, PCS) phone, a cordless telephone set, a Session Initiation Protocol (Session Initiated Protocol, SIP) phone, a wireless local loop (Wireless Local Loop, WLL) station, or a personal digital assistant (Personal Digital Assistant, PDA). The wireless terminal device may also be referred to as a system, a subscriber unit (Subscriber Unit), a subscriber station (Subscriber Station), a mobile station (Mobile Station), a mobile console (Mobile), a remote station (Remote Station), an access point (Access Point), a remote terminal device (Remote Terminal), an access terminal device (Access Terminal), a user terminal device (User Terminal), a user agent (User Agent), a user device (User Device), or user equipment (User Equipment).

In the technical solution provided in this implementation of this disclosure, the session management functional entity triggers deactivation of the LADN session after determining that the UE has left the area covered by the LADN, and after the LADN session is deactivated, determines, depending on whether the UE re-enters the area covered by the LADN, whether to release the LADN session. In this way, after the UE leaves the area covered by the LADN, the LADN session established before the UE leaves the area covered by the LADN is processed. The following describes in detail the technical solution provided in this implementation of this disclosure.

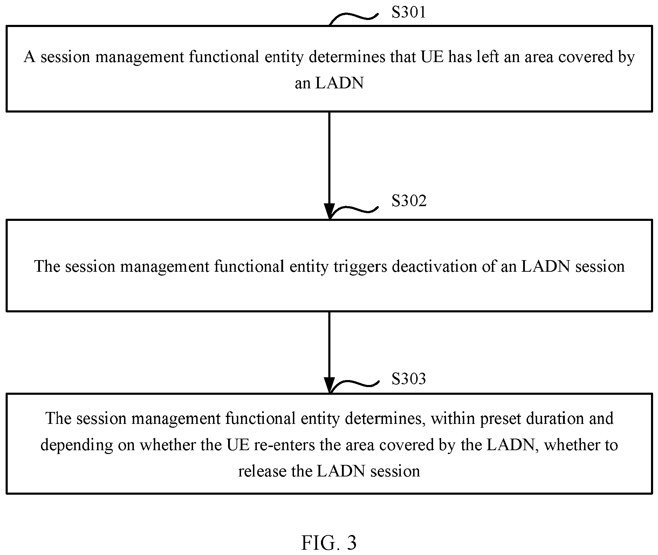

An implementation of this disclosure provides a session processing method. As shown in FIG. 3, the method includes the following steps.
S301. A session management functional entity determines that UE has left an area covered by an LADN.
In S301, the session management functional entity may determine, based on indication information for indicating a location of the UE, that the UE has left the area covered by the LADN. Before S301, the session management functional entity may receive, from a mobility management functional entity, the indication information for indicating the location of the UE.
In S301, the session management functional entity may determine, by using the following two methods, that the UE has left the area covered by the LADN:
   Method 1: If the indication information includes location information of the UE, the session management functional entity determines, based on the location information of the UE and information, pre-stored by the session management functional entity, about the area covered by the LADN, whether the location indicated by the location information of the UE is in an area indicated by the pre-stored information about the area covered by the LADN. If the location indicated by the location information of the UE is not in the area indicated by the information, pre-stored by the session management functional entity, about the area covered by the LADN, the UE is not located in the area covered by the LADN, and the session management functional entity may determine that the UE has left the area covered by the LADN.
   Method 2: If the indication information includes information for indicating that the UE has left the area covered by the LADN, the session management functional entity directly determines, based on the indication information, that the UE has left the area covered by the LADN. Before the mobility management functional entity sends, to the session management functional entity, the information for indicating that the UE has left the area covered by the LADN, the mobility management functional entity obtains the location information of the UE, and determines, based on the location information of the UE and information, pre-stored by the mobility management functional entity, about the area covered by the LADN, whether the location indicated by the location information of the UE is in the area indicated by the pre-stored information about the area covered by the LADN. If the location indicated by the location information of the UE is not in the area indicated by the information, pre-stored by the mobility management functional entity, about the area covered by the LADN, the UE is not located in the area covered by the LADN, and the mobility management functional entity may determine that the UE has left the area covered by the LADN.

In the method 1 and the method 2, the mobility management functional entity may obtain the location information of the UE from a radio access network.

In the method 1 and the method 2, for ease of determining whether the location indicated by the location information of the UE is in the area indicated by the pre-stored information about the area covered by the LADN, the information about the area covered by the LADN includes cell identities of all cells in the area covered by the LADN, and the location information of the UE includes a cell identity of a cell in which the UE is located; and/or the information about the area covered by the LADN includes all tracking area identities (Tracking Area Identity, TAI) in the area covered by the LADN, and the location information of the UE includes a TAI of the UE. When the information about the area covered by the LADN and the location information of the UE each include a TAI, a requirement of actual application is better met.

For example, the information about the area covered by the LADN includes the cell identities of all the cells in the area covered by the LADN, and the location information of the UE includes the cell identity of the cell in which the UE is located. After the session management functional entity receives, from the mobility management functional entity, the cell identity of the cell in which the UE is located, if the cell identity of the cell in which the UE is located does not exist in the cell identities of all the cells in the area covered by the LADN, the cell in which the UE is located is not a cell in the area covered by the LADN, and the session management functional entity may determine that the UE has left the area covered by LADN.

S302. The session management functional entity triggers deactivation of an LADN session.

The LADN session is a session used by the UE to perform data transmission in the area covered by the LADN. The LADN session is still in an active state after the UE leaves the area covered by the LADN, and the LADN session can only be used by the UE to perform data transmission in the area covered by the LADN. Therefore, the UE needs to be prohibited from continuing to perform data transmission by using the LADN session in the active state after leaving the area covered by the LADN. In addition, because the LADN session in the active state occupies a downlink tunnel resource and an air interface resource, the LADN session in the active state continues to occupy these resources after the UE leaves the area covered by the LADN, causing a waste of the resources. Based on the foregoing reasons, in this implementation, when determining that the UE has left the area covered by the LADN, the session management functional entity triggers deactivation of the LADN session, to prevent the UE from continuing to perform data transmission by using the LADN session in the active state after the UE leaves the area covered by the LADN, and release the downlink tunnel resource and the air interface resource that are occupied by the LADN session. A method used by the session management functional entity to trigger deactivation of the LADN session includes:
The session management functional entity sends, to a user plane functional entity, a message for instructing to release the downlink tunnel resource occupied by the LADN session, and after receiving the message, the user plane functional entity releases the downlink tunnel resource occupied by the LADN session. Alternatively, the session management functional entity sends, to the mobility management functional entity, a message for instructing to release the air interface resource occupied by the LADN session, the mobility management functional entity forwards the message to the radio access network, and the radio access network interacts with the UE to release the air interface resource occupied by the LADN session.

It should be noted that in the method used by the session management functional entity to trigger deactivation of the LADN session, for processes of releasing the downlink tunnel resource and the air interface resource that are occupied by the LADN session, refer to the prior art. Details are not described herein. In this implementation, a sequence between the sending, by the session management functional entity to a user plane functional entity, a message for instructing to release the downlink tunnel resource occupied by the LADN session and the sending, by the session management functional entity to the mobility management functional entity, a message for instructing to release the air interface resource occupied by the LADN session is not limited. S303. The session management functional entity determines, within preset duration and depending on whether the UE re-enters the area covered by the LADN, whether to release the LADN session. In specific implementation, in S303, if the UE does not re-enter, within the preset duration, the area covered by the LADN, the session management functional entity releases the LADN session. This can prevent the following problem: If the LADN session of the UE is not released in a long time after the UE leaves the area covered by the LADN, the LADN session occupies a network resource for a long time, causing a waste of the resource. Alternatively, if the UE re-enters, within the preset duration, the area covered by the LADN, the session management functional entity determines not to release the LADN session. This can prevent the following problem: If the LADN session of the UE is released immediately after the UE leaves the area covered by the LADN, when the UE re-enters the area covered by the LADN, an LADN session needs to be established for the UE again; and repeated establishment of an LADN session causes an increase in signaling overheads.

In specific implementation, a timer may be used for timing the preset duration in S303 to implement S303. A method includes the following:
When the session management functional entity determines that the UE has left the area covered by the LADN, the session management functional entity starts the timer whose timing duration is the preset duration, and starts to detect whether the UE re-enters the area covered by the LADN. If it is detected, before the timer expires, that the UE re-enters the area covered by the LADN, the session management functional entity determines not to release the LADN session, and turns off the timer. If it is not detected, when the timer expires, that the UE re-enters the area covered by the LADN, the session management functional entity releases the LADN session.

For a method used by the session management functional entity to detect whether the UE re-enters the area covered by the LADN in S303, refer to the methods used by the session management functional entity to determine whether the UE has left the area covered by the LADN. Details are not repeated herein.

Optionally, after the session management functional entity determines that the UE has left the area covered by the LADN and then triggers deactivation of the LADN session, if the session management functional entity has not detected, within the preset duration, that the UE re-enters the area covered by the LADN, and the preset duration has not elapsed, the session management functional entity is temporarily unable to determine whether to release the LADN session. In this case, because the LADN session is in an inactive state at this time and the session management functional entity has not detected that the UE re-enters the area covered by the LADN, if the session management functional entity receives a service request (Service Request, SR) message from the UE, where the SR message is used by the UE to request to perform data transmission by using the LADN session, the session management functional entity sends, to the UE, a response message for indicating that a request corresponding to the SR message fails. Optionally, the SR message may be further used to indicate the location of the UE, so that the session management functional entity can determine, based on the UE location indicated by the SR message, that the UE has not re-entered the area covered by the LADN. For example, the preset duration is 5 minutes, and the session management functional entity receives the SR message from the UE at a second minute. Up to this time, the session management functional entity has not detected that the UE re-enters the area covered by the LADN, and the session management functional entity sends, to the UE, the response message for indicating that the request corresponding to the SR message fails.

Optionally, after the session management functional entity determines not to release the LADN session, because the LADN session is in an inactive state, if the session management functional entity receives, from the UE, an SR message for requesting to perform data transmission by using the LADN session, the session management functional entity triggers activation of the LADN session, so that the UE can perform data transmission directly by using the activated LADN session. The following describes, by using the 5G system shown in FIG. 2 as an example, the session processing method provided in this implementation of this disclosure.

### Example 1:

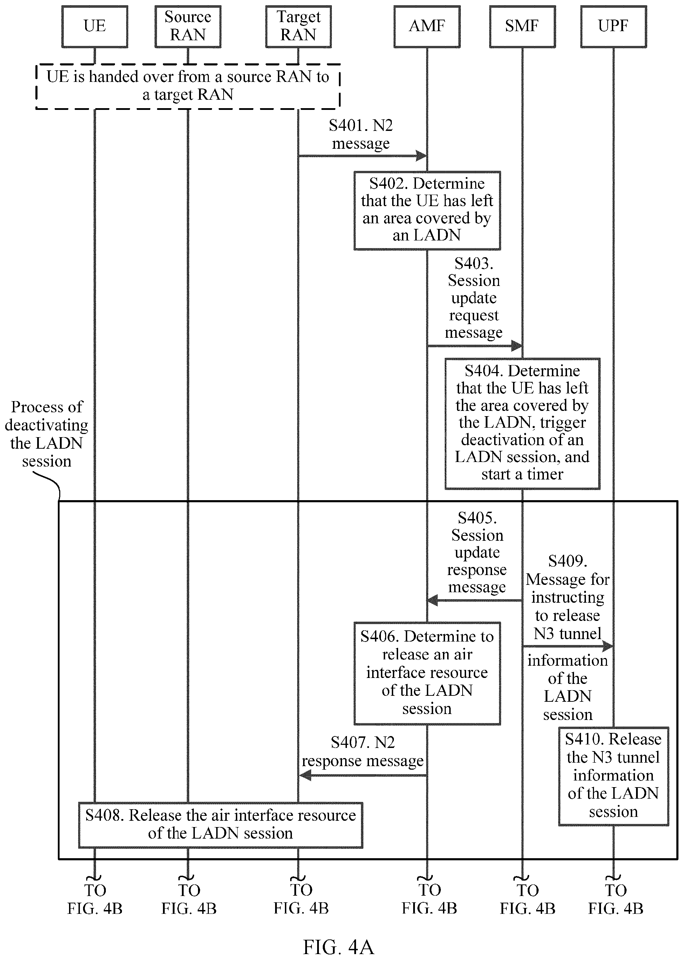

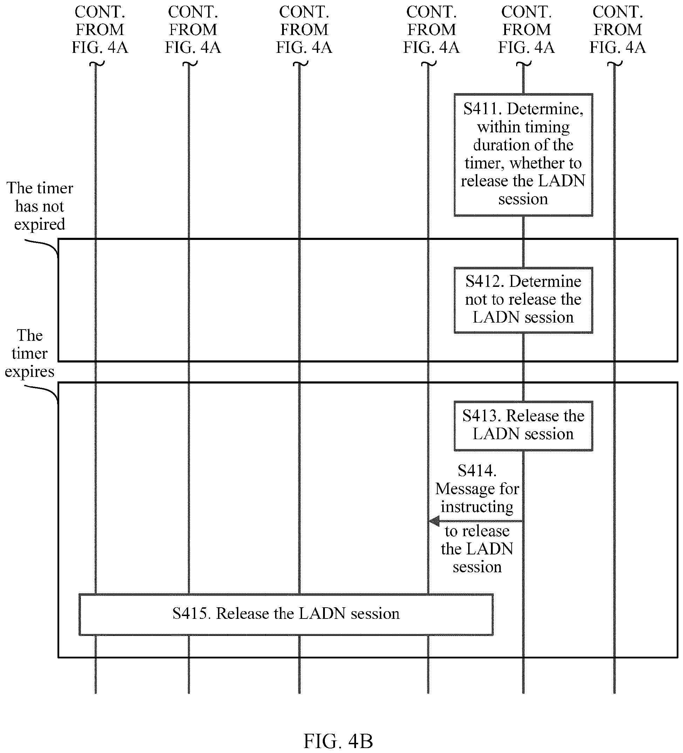

For example, in the 5G system shown in FIG. 2, a process in which the UE performs handover between RANs based on an Xn interface is combined with an LADN session processing process, where the Xn interface is an interface between a source RAN and a target RAN. Network elements in the 5G system that are used in the session processing method provided in this implementation of this disclosure include the source RAN, the target RAN, the AMF, the SMF, the UPF, and the like. As shown in FIG. 4A and FIG. 4B, a process of interaction between the network elements is as follows:
S401. The target RAN sends an N2 message to the AMF.

After the UE is handed over from the source RAN to the target RAN, the target RAN sends the N2 message to the AMF. The N2 message includes location information of the UE and N2-interface-based session management (Session Management, SM) information, and the SM information includes N3 tunnel information of all LADN sessions of the UE that are in an active state.

S402. The AMF determines that the UE has left an area covered by an LADN.

After the AMF receives the N2 message sent by the target RAN, the AMF determines, based on the location information of the UE included in the N2 message and information, pre-stored by the AMF, about the area covered by the LADN, that the UE has left the area covered by the LADN.

S403. The AMF sends a session update request message to the SMF

The session update request message sent by the AMF to the SMF includes information for indicating that the UE has left the area covered by the LADN.

S404. The SMF determines that the UE has left the area covered by the LADN, triggers deactivation of an LADN session, and starts a timer.

After receiving the session update request message sent by the AMF, the SMF directly determines, based on the information, included in the received session update request message, for indicating that the UE has left the area covered by the LADN, that the UE has left the area covered by the LADN. After the SMF determines that the UE has left the area covered by the LADN, the SMF triggers deactivation of the LADN session, and starts the timer whose timing duration is preset duration. A start moment of the timing duration may be a moment at which the SMF determines that the UE has left the area covered by the LADN.

That the SMF triggers deactivation of the LADN session includes releasing an air interface resource and an N3 tunnel resource of the LADN session. After S404 is performed, the following four steps S405 to S408 are performed to release the air interface resource of the LADN session, and the following two steps S409 and S410 are performed to release the N3 tunnel resource of the LADN session.

S405. The SMF sends a session update response message to the AMF.

The session update response message sent by the SMF to the AMF includes an identifier for instructing to deactivate the LADN session of the UE.

S406. The AMF determines to release an air interface resource of the LADN session.

After receiving the session update response message sent by the SMF, the AMF determines, based on the identifier, included in the session update response message, for instructing to deactivate the LADN session of the UE, to release the air interface resource occupied by the LADN session of the UE.

S407. The AMF sends an N2 response message to the target RAN.

After determining to release the air interface resource occupied by the LADN session of the UE, the AMF sends the N2 response message to the target RAN, where the N2 response message includes the identifier for instructing to deactivate the LADN session of the UE.

S408. Release the air interface resource of the LADN session.

After the target RAN receives the N2 response message sent by the AMF, the target RAN releases, based on the identifier, included in the N2 response message, for instructing to deactivate the LADN session of the UE, the air interface resource occupied by the LADN session of the UE. The target RAN interacts with the UE to release the air interface resource occupied by the LADN session of the UE.

S409. The SMF sends, to the UPF, a message for instructing to release N3 tunnel information of the LADN session.

S410. The UPF releases the N3 tunnel information of the LADN session.

After receiving the message, sent by the SMF, for instructing to release the N3 tunnel information of the LADN session, the UPF releases the N3 tunnel information of the LADN session. An N3 interface is a user plane interface between a RAN and the UPF, and the N3 interface may be used for signaling transmission between the RAN and the UPF.

It should be noted that in this implementation, a sequence for performing the four steps S405 to S408 and performing the two steps S409 and S410 is not limited, that is, a sequence between releasing the air interface resource of the LADN session and releasing the tunnel resource of the LADN session is not limited.

S411. The SMF determines, within timing duration of the timer and depending on a result of detecting whether the UE re-enters the area covered by the LADN, whether to release the LADN session.

If the SMF detects, within the timing duration of the timer, that the UE re-enters the area covered by the LADN, S412 is performed. If the SMF has not detected, within the timing duration of the timer, that the UE re-enters the area covered by the LADN, S413 is performed.

S412. The SMF determines not to release the LADN session.

Before the timer expires, or in other words, within the timing duration of the timer, if the SMF detects that the UE re-enters the area covered by the LADN, the SMF determines not to release the LADN session, and turns off the timer.

S413. The SMF releases the LADN session.

If the SMF has not detected, when the timer expires, that the UE re-enters the area covered by the LADN, the SMF releases the LADN session.

S414. The SMF sends, to the AMF, a message for instructing to release the LADN session. S415. Release the LADN session.

After the AMF receives the message, sent by the SMF, for instructing to release the LADN session, the AMF releases the LADN session according to the instruction of the message.

For both a process in which the SMF releases the LADN session in S413 and a process in which the AMF releases the LADN session in S415, refer to the prior art. Details are not described herein. For specific implementation methods of the steps in the process of interaction between the network elements shown in FIG. 4A and FIG. 4B, refer to the related descriptions of S301 to S303. Details are not repeated herein.

### Example 2:

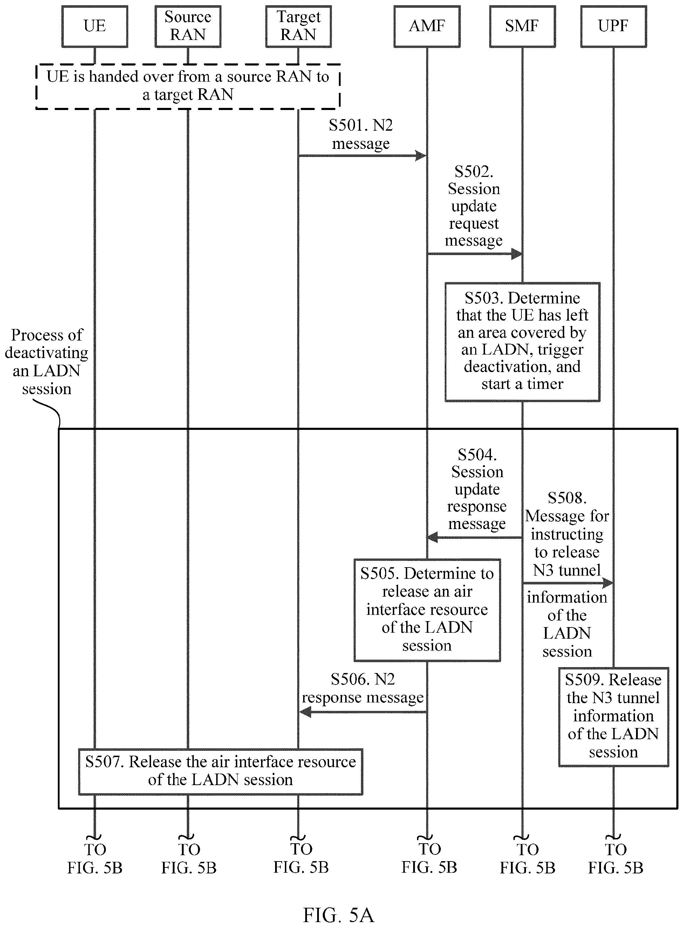

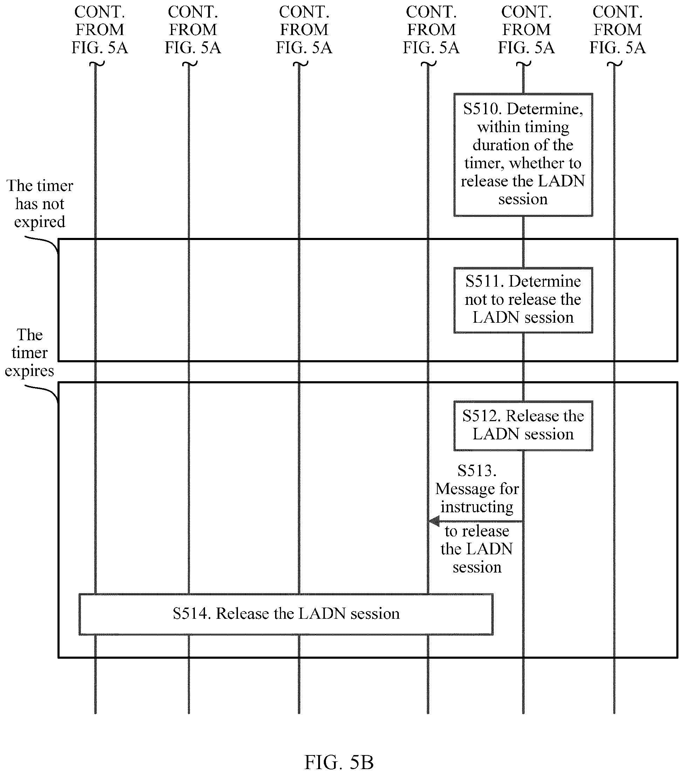

For example, in the 5G system shown in FIG. 2, a process in which the UE performs handover between RANs based on an Xn interface is combined with an LADN session processing process. Network elements in the 5G system that are used in the session processing method provided in this implementation of this disclosure include a source RAN, a target RAN, the AMF, the SMF, the UPF, and the like. A process of interaction between the network elements is shown in FIG. 5A and FIG. 5B. The interaction process shown in FIG. 5A and FIG. 5B is similar to the interaction process shown in FIG. 4A and FIG. 4B. A similar part between the two interaction processes is not described, and a main difference between the two interaction processes lies in the following several steps.

S502. The AMF sends a session update request message including location information of the UE to the SMF.

After receiving the N2 message sent by the target RAN, the AMF obtains the location information of the UE included in the N2 message, and sends the session update request message to the SMF, where the session update request message includes the location information of the UE.

S503. The SMF determines that the UE has left an area covered by an LADN, triggers deactivation of an LADN session, and starts a timer.

After the SMF receives the session update request message sent by the AMF, the SMF determines, based on the location information of the UE included in the received session update request message and information, pre-stored by the SMF, about the area covered by the LADN, that the UE has left the area covered by the LADN. After the SMF determines that the UE has left the area covered by the LADN, the SMF triggers deactivation of the LADN session, and starts the timer whose timing duration is preset duration. A start moment of the timing duration may be a moment at which the SMF determines that the UE has left the area covered by the LADN.

For specific implementation methods of steps S501 and S503 to S514 in the process of interaction between the network elements shown in FIG. 5A and FIG. 5B, refer to the related descriptions of steps S401 and S404 to S415 in the process of interaction between the network elements shown in FIG. 4A and FIG. 4B. Details are not repeated herein.

### Example 3:

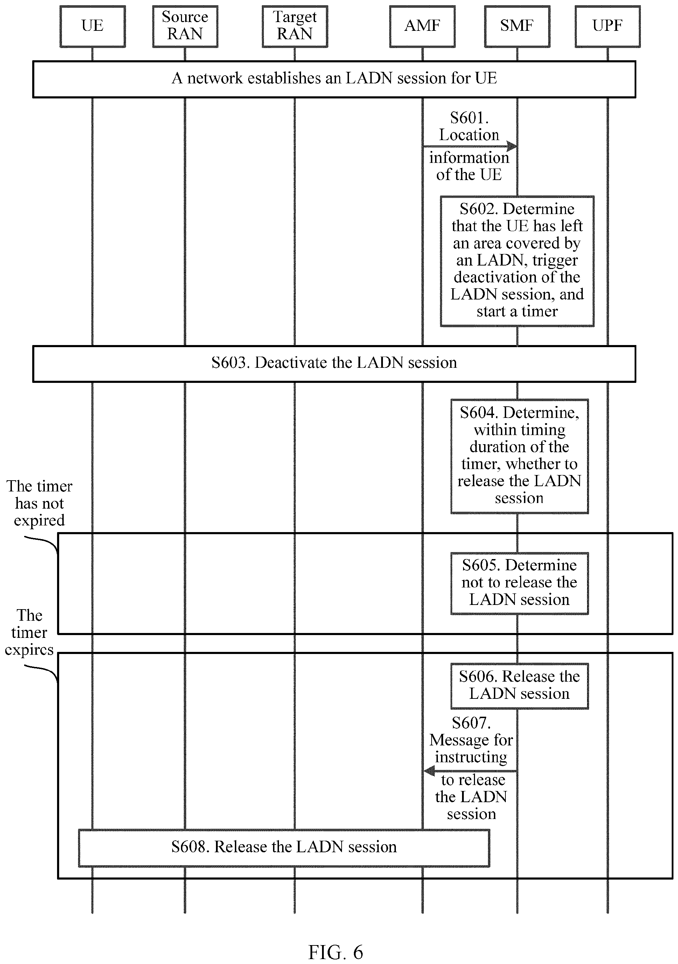

A process of processing an LADN session by using an independent information exchange process in the 5G system shown in FIG. 2 is used as an example. A specific process of interaction between the network elements in the 5G system is shown in FIG. 6. Network elements in the 5G system that are used in the session processing method provided in this implementation of this disclosure include a source RAN, a target RAN, the AMF, the SMF, the UPF, and the like. As shown in FIG. 6, a process of interaction between the network elements is as follows:
S601. The AMF sends location information of UE to the SMF.

After a network establishes an LADN session for the UE, the AMF sends the location information of the UE to the SMF.

Optionally, before S601, the SMF may request the AMF to report the location information of the UE to the SMF. The SMF may further request frequency at which the AMF reports the location information of the UE to the SMF, a quantity of times for which the AMF reports the location information of the UE to the SMF, and the like. For example, the SMF may request the AMF to report the location information of the UE to the SMF only once. For another example, the SMF may request the AMF to report the location information of the UE to the SMF every 1 second. S602. The SMF determines that the UE has left an area covered by an LADN, triggers deactivation of an LADN session, and starts a timer.

After the SMF receives the location information of the UE sent by the AMF, the SMF determines, based on the received location information of the UE and pre-stored information about the area covered by the LADN, that the UE has left the area covered by the LADN.

After the SMF determines that the UE has left the area covered by the LADN, the SMF triggers deactivation of the LADN session, and starts the timer whose timing duration is preset duration. In a process in which the SMF triggers deactivation of the LADN session, the SMF sends, to the AMF, a message for instructing to deactivate the LADN session of the UE, or the SMF sends, to the UPF, a message for instructing to release N3 tunnel information of the LADN session.

That the SMF triggers deactivation of the LADN session includes releasing an air interface resource and a downlink tunnel resource of the LADN session. After S602 is performed, S603 is performed to release the air interface resource and the downlink tunnel resource of the LADN session.
S603. Deactivate the LADN session.

A process in which the AMF and the target RAN release the air interface resource of the LADN session in S603 is similar to the four steps S405 to S408 in the interaction process shown in FIG. 4A and FIG. 4B, and a process in which the UPF releases the downlink tunnel resource of the LADN session is similar to the two steps S409 and S410 in the interaction process shown in FIG. 4A and FIG. 4B. Details are not repeated herein.

Five steps S604 to S608 in the process of interaction between the network elements shown in FIG. 6 are similar to the five steps S411 to S415 in the process of interaction between the network elements shown in FIG. 4A and FIG. 4B. Details are not repeated herein.

### Example 4:

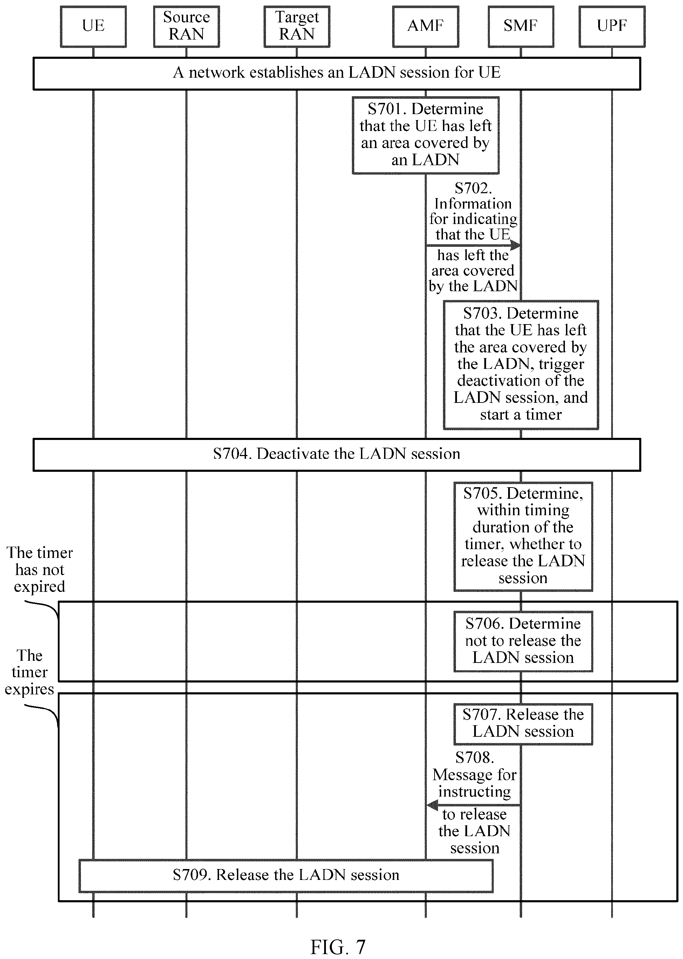

A process of processing an LADN session by using an independent information exchange process in the 5G system shown in FIG. 2 is used as an example. Network elements in the 5G system that are used in the session processing method provided in this implementation of this disclosure include a source RAN, a target RAN, the AMF, the SMF, the UPF, and the like. A process of interaction between the network elements is shown in FIG. 7. The interaction process shown in FIG. 7 is similar to the interaction process shown in FIG. 6. A similar part between the two interaction processes is not described, and a main difference between the two interaction processes lies in the following two steps.
S701. The AMF determines that UE has left an area covered by an LADN.

The AMF determines, based on location information of the UE and pre-stored information about the area covered by the LADN, that the UE has left the area covered by the LADN.
S702. The AMF sends, to the SMF, information for indicating that the UE has left the area covered by the LADN.
S703. The SMF determines that the UE has left the area covered by the LADN.

After the SMF receives the information, sent by the AMF, for indicating that the UE has left the area covered by the LADN, the SMF directly determines, based on the information, that the UE has left the area covered by the LADN.

For specific implementation methods of steps S704 to S709 in the process of interaction between the network elements shown in FIG. 7, refer to the related descriptions of steps S603 to S608 in the process of interaction between the network elements shown in FIG. 6. Details are not repeated herein.

In the session processing method provided in this implementation of this disclosure, for the LADN session established by the session management functional entity for the UE that has entered the area covered by the LADN, after determining that the UE has left the area covered by the LADN, the session management functional entity triggers deactivation of the LADN session, and determines, depending on whether the UE re-enters, within the preset duration, the area covered by the LADN, whether to release the LADN session. In this way, after the UE leaves the area covered by the LADN, the LADN session established before the UE leaves the area covered by the LADN is processed. Therefore, according to the technical solution provided in this implementation of this disclosure, the network resource occupied by the LADN session can be properly utilized, and network resource utilization can be improved.

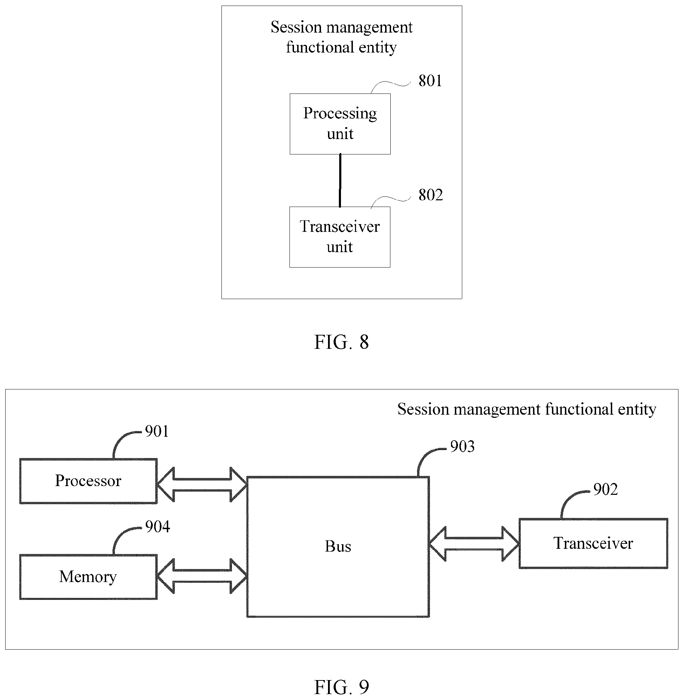

Based on a same application concept, an implementation of this disclosure further provides a session management functional entity. The session management functional entity can implement the method provided in the implementation corresponding to FIG. 3. As shown in FIG. 8, the session management functional entity includes a processing unit 801 and a transceiver unit 802. The processing unit 801 is configured to determine that user equipment UE has left an area covered by a local area data network LADN.

The transceiver unit 802 is configured to trigger deactivation of an LADN session, where the LADN session is a session used by the UE to perform data transmission in the area covered by the LADN.

The processing unit 801 is further configured to determine, within preset duration and depending on whether the UE re-enters the area covered by the LADN, whether to release the LADN session. Optionally, when determining, within the preset duration and depending on whether the UE re-enters the area covered by the LADN, whether to release the LADN session, the processing unit 801 is specifically configured to release the LADN session if the UE does not re-enter, within the preset duration, the area covered by the LADN.

Optionally, when determining, within the preset duration and depending on whether the UE re-enters the area covered by the LADN, whether to release the LADN session, the processing unit 801 is specifically configured to: if the UE re-enters, within the preset duration, the area covered by the LADN, determine not to release the LADN session.

Optionally, the processing unit 801 is further configured to: after determining not to release the LADN session, if a service request SR message for requesting to perform data transmission by using the LADN session is received from the UE by using the transceiver unit 802, trigger, by using the transceiver unit 802, activation of the LADN session.

Optionally, the transceiver unit 802 is further configured to: after the transceiver unit 802 triggers deactivation of the LADN session and before the processing unit 801 determines whether to release the LADN session, if receiving, from the UE, the service request SR message for requesting to perform data transmission by using the LADN session, send, to the UE, a response message for indicating that a request corresponding to the SR message fails.

Optionally, when determining that the user equipment UE has left the area covered by the local area data network LADN, the processing unit 801 is specifically configured to:
receive indication information from a mobility management functional entity by using the transceiver unit 802, where the indication information is used to indicate a location of the UE; and determine, based on the indication information, that the UE has left the area covered by the LADN.

Optionally, the indication information may include location information of the UE; and if the indication information includes the location information of the UE, when determining, based on the indication information, that the UE has left the area covered by the LADN, the processing unit 801 is specifically configured to:
if the location indicated by the location information of the UE is not in an area indicated by information, pre-stored by the session management functional entity, about the area covered by the LADN, determine that the UE has left the area covered by the LADN.

Optionally, the indication information may include information for indicating that the UE has left the area covered by the LADN; and if the indication information includes the information for indicating that the UE has left the area covered by the LADN, when determining, based on the indication information, that the UE has left the area covered by the LADN, the processing unit 801 is specifically configured to:
determine, based on the information, included in the indication information, for indicating that the UE has left the area covered by the LADN, that the UE has left the area covered by the LADN.

Optionally, the location information of the UE includes a cell identity of a cell in which the UE is located, and the information about the area covered by the LADN includes cell identities of all cells in the area covered by the LADN; or the location information of the UE includes a tracking area identity TAI of the UE, and the information about the area covered by the LADN includes all TAIs in the area covered by the LADN.

When triggering deactivation of the LADN session, the transceiver unit 802 is configured to: send, to the mobility management functional entity, a message for instructing to release an air interface resource of the LADN session.

It should be noted that division of units in this implementation of this disclosure is merely an example, and is only division of logical functions. Another division manner may be available in actual implementation. Functional units in this implementation of this disclosure may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of a software functional unit and sold or used as an independent product, the integrated unit may be stored in a computer readable storage medium. Based on such an understanding, the technical solutions of this disclosure essentially, or the part contributing to the prior art, or all or some of the technical solutions may be implemented in a form of a software product. The computer software product is stored in a storage medium and includes several instructions for instructing a computer device (which may be a personal computer, a server, a network device, or the like) or a processor (processor) to perform all or some of the steps of the methods described in the implementations of this disclosure. The foregoing storage medium includes any medium that can store program code, such as a USB flash drive, a removable hard disk, a read-only memory (Read-Only Memory, ROM), a random access memory (Random Access Memory, RAM), a magnetic disk, or an optical disc.

Based on a same application concept, an implementation of this disclosure further provides a session management functional entity. The session management functional entity can implement the method provided in the implementation corresponding to FIG. 3, and may be an apparatus the same as the session management functional entity shown in FIG. 8. As shown in FIG. 9, the session management functional entity includes a processor 901, a transceiver 902, a bus 903, and a memory 904.

The processor 901 is configured to read a program in the memory 903 to perform the following process:
determining that UE has left an area covered by an LADN; triggering deactivation of an LADN session by using the transceiver 902, where the LADN session is a session used by the UE to perform data transmission in the area covered by the LADN; and determining, within preset duration and depending on whether the UE re-enters the area covered by the LADN, whether to release the LADN session.

The transceiver 902 is configured to receive and send data under control of the processor 901. Optionally, when determining whether to release the LADN session, the processor 901 is specifically configured to release the LADN session if the UE does not re-enter, within the preset duration, the area covered by the LADN.

Optionally, when determining whether to release the LADN session, the processor 901 is specifically configured to: if the UE re-enters, within the preset duration, the area covered by the LADN, determine not to release the LADN session.

Correspondingly, the processor 901 is further configured to: after determining not to release the LADN session, trigger activation of the LADN session if an SR message for requesting to perform data transmission by using the LADN session is received from the UE by using the transceiver 902.

Optionally, the processor 901 is further configured to: after deactivation of the LADN session is triggered by using the transceiver 902, and before the processor 901 determines whether to release the LADN session, if the SR message for requesting to perform data transmission by using the LADN session is received from the UE by using the transceiver 902, send, to the UE by using the transceiver 902, a response message for indicating that a request corresponding to the SR message fails.

Optionally, when determining that the user equipment UE has left the area covered by the local area data network LADN, the processor 901 is specifically configured to:
receive indication information from a mobility management functional entity by using the transceiver 902, where the indication information is used to indicate a location of the UE; and determine, based on the indication information, that the UE has left the area covered by the LADN. Optionally, the indication information may include location information of the UE; and if the indication information includes the location information of the UE, when determining, based on the indication information, that the UE has left the area covered by the LADN, the processor 901 is specifically configured to:
if the location indicated by the location information of the UE is not in an area indicated by information, pre-stored by the session management functional entity, about the area covered by the LADN, determine that the UE has left the area covered by the LADN.

Optionally, the indication information may include information for indicating that the UE has left the area covered by the LADN; and if the indication information includes the information for indicating that the UE has left the area covered by the LADN, when determining, based on the indication information, that the UE has left the area covered by the LADN, the processor 901 is specifically configured to:
determine, based on the information, included in the indication information, for indicating that the UE has left the area covered by the LADN, that the UE has left the area covered by the LADN.

Optionally, the location information of the UE includes a cell identity of a cell in which the UE is located, and the information about the area covered by the LADN includes cell identities of all cells in the area covered by the LADN; or the location information of the UE includes a tracking area identity TAI of the UE, and the information about the area covered by the LADN includes all TAIs in the area covered by the LADN.

When triggering deactivation of the LADN session by using the transceiver 902, the processor 901 is configured to:
send, to the mobility management functional entity by using the transceiver 902, a message for instructing to release an air interface resource of the LADN session.

The processor 901, the transceiver 902, and the memory 904 are connected to each other by using the bus 903. The bus 903 may be a Peripheral Component Interconnect (peripheral component interconnect, PCI) bus, an Extended Industry Standard Architecture (extended industry standard architecture, EISA) bus, or the like. The bus may be classified into an address bus, a data bus, a control bus, and the like.

In FIG. 9, a bus architecture may include any quantity of interconnected buses and bridges, and specifically connect together various circuits of one or more processors represented by the processor 901 and a memory represented by the memory 904. The bus architecture may further connect together various other circuits such as a peripheral device, a voltage stabilizer, and a power management circuit. These are well known in the art, and therefore are not further described in this specification. A bus interface provides an interface. The transceiver 902 may be a plurality of elements, including a transmitter and a receiver, and provides units configured to perform communication with various other apparatuses over a transmission medium. The processor 901 is responsible for management of the bus architecture and general processing, and the memory 904 may store data used by the processor 901 when the processor 901 performs an operation. Optionally, the processor 901 may be a central processing unit, an application-specific integrated circuit (Application Specific Integrated Circuit, ASIC), a field-programmable gate array (Field-Programmable Gate Array, FPGA) or a complex programmable logic device (Complex Programmable Logic Device, CPLD).

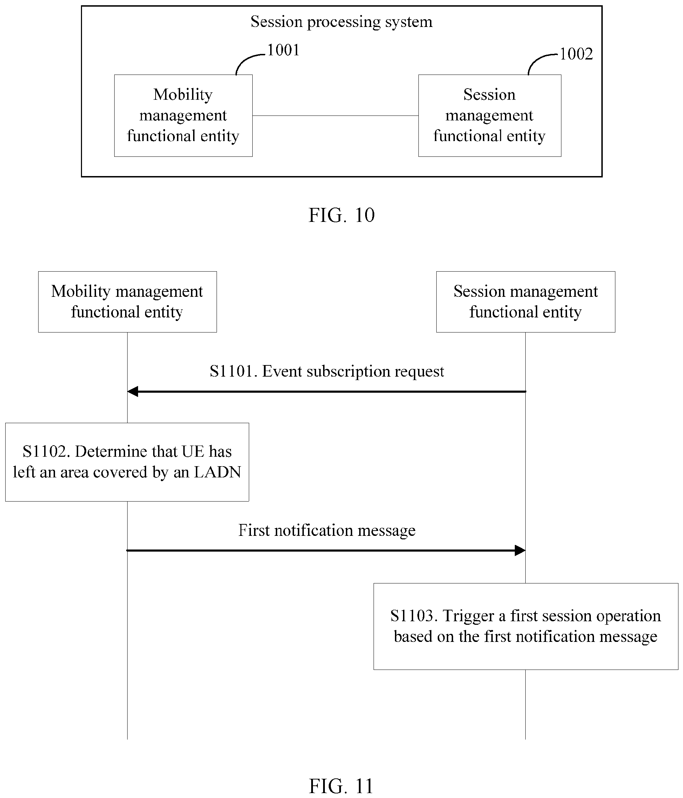

An implementation of this disclosure further provides a session processing system. An architecture of the system may be the same as the architecture of the session processing system described above. As shown in FIG. 10, the session processing system includes a mobility management functional entity 1001 and a session management functional entity 1002. An operating principle of the system is as follows:
The session management functional entity 1002 sends an event subscription request to the mobility management functional entity 1001, where the event may include that UE leaves an area covered by an LADN. After receiving the event subscription request sent by the session management functional entity 1002, if determining that the UE has left the area covered by the LADN, the mobility management functional entity 1001 sends, to the session management functional entity 1002, a first notification message for notifying that the UE has left the area covered by the LADN. After receiving the first notification message, the session management functional entity 1002 may trigger a first session operation based on the first notification message, where the first session operation includes deactivating an LADN session or releasing an LADN session.

In specific implementation, after the session management functional entity 1002 receives the first notification message, the session management functional entity 1002 may trigger deactivation of the LADN session based on the first notification message. This facilitates releasing, after the UE leaves the area covered by the LADN, a downlink tunnel resource and an air interface resource that are occupied by the LADN session, thereby improving network resource utilization. After the session management functional entity 1002 receives the first notification message, the session management functional entity 1002 may alternatively release the LADN session based on the first notification message. This can prevent a problem that a resource waste is caused because the LADN session of the UE is still reserved after the UE leaves the area covered by the LADN. After the session management functional entity 1002 receives the first notification message, the session management functional entity 1002 may further deactivate the LADN session based on the first notification message, and determine, within preset duration and depending on whether the UE re-enters the area covered by the LADN, whether to release the LADN session. The mobility management functional entity 1001 may determine, based on location information of the UE and pre-stored information about the area covered by the LADN, that the UE has left the area covered by the LADN.

In the foregoing session processing system, the event in the event subscription request may further include that the UE re-enters the area covered by the LADN. After the mobility management functional entity 1001 receives the event subscription request sent by the session management functional entity 1002, if the event in the event subscription request includes that the UE re-enters the area covered by the LADN, and if the mobility management functional entity 1001 determines that the UE has re-entered the area covered by the LADN, the mobility management functional entity 1001 sends, to the session management functional entity 1002, a second notification message for notifying that the UE has re-entered the area covered by the LADN. After receiving the second notification message from the mobility management functional entity 1001, the session management functional entity 1002 triggers a second session operation, where the second session operation includes activating the LADN session or triggering establishment of an LADN session between the UE and the LADN. The mobility management functional entity 1001 may also determine, based on location information of the UE and the pre-stored information about the area covered by the LADN, that the UE has entered the area covered by the LADN.

The following describes in detail the technical solution provided in this implementation of this disclosure.

An implementation of this disclosure further provides a session processing method. As shown in FIG. 11, the method includes the following steps.

S1101. A session management functional entity sends an event subscription request to a mobility management functional entity.

An event in the event subscription request may include that UE leaves an area covered by an LADN. If the event in the event subscription request includes that the UE leaves the area covered by the LADN, the event subscription request is used to instruct the mobility management functional entity to notify, after the mobility management functional entity determines that the UE has left the area covered by the LADN, the session management functional entity of the event that the UE has left the area covered by the LADN. Optionally, the event in the event subscription request may further include that the UE enters the area covered by the LADN. Herein, it may be understood as that the event further includes that the UE re-enters the area covered by the LADN after leaving the area covered by the LADN. The event subscription request includes but is not limited to an identifier of the UE and an identifier of the LADN, and the identifier of the LADN is a local data network name (Local DNN).

Optionally, if the session management functional entity expects to subscribe, from the mobility management functional entity, to a notification of the event that the UE leaves the area covered by the LADN and a notification of the event that the UE enters the area covered by the LADN, the session management functional entity may send one event subscription request to the mobility management functional entity, or may send two event subscription requests to the mobility management functional entity at different moments. This is not limited in this implementation. For example, after the network establishes an LADN session for the UE, the session management functional entity sends, to the mobility management functional entity, an event subscription request for subscribing to the notification of the event that the UE leaves the area covered by the LADN; after the mobility management functional entity determines that the UE has left the area covered by the LADN, and then sends a first notification message, the session management functional entity receives the first notification message and sends, to the mobility management functional entity, an event subscription request for subscribing to the notification of the event that the UE enters the area covered by the LADN.

S1102. If determining that UE has left an area covered by an LADN, the mobility management functional entity sends a first notification message to the session management functional entity.

In S1102, after the mobility management functional entity receives the event subscription request sent by the session management functional entity, the mobility management functional entity may obtain the identifier of the UE and the identifier of the LADN that are included in the event subscription request, and then determine whether the UE indicated by the identifier of the UE has left the area covered by the LADN indicated by the identifier of the LADN. If the mobility management functional entity determines that the UE has left the area covered by the LADN, the mobility management functional entity may send, to the session management functional entity, the first notification message for notifying that the UE has left the area covered by the LADN.

In S1102, the mobility management functional entity may determine, based on location information of the UE and information about the area covered by the LADN, that the UE has left the area covered by the LADN. A method for determining that the UE has left the area covered by the LADN is the same as the method, in S301, used by the session management functional entity to determine whether the UE has left the area covered by the LADN. For the specific method, refer to the method, in S301, used by the session management functional entity to determine whether the UE has left the area covered by the LADN. Details are not repeated herein.

S1103. The session management functional entity triggers a first session operation based on the first notification message.

The LADN session is a session used by the UE to perform data transmission in the area covered by the LADN. The LADN session is still in an active state after the UE leaves the area covered by the LADN, and the LADN session can only be used by the UE to perform data transmission in the area covered by the LADN. Therefore, the UE needs to be prohibited from continuing to perform data transmission by using the LADN session in the active state after leaving the area covered by the LADN. In addition, because the LADN session in the active state occupies a network resource, the LADN session in the active state continues to occupy the network resource after the UE leaves the area covered by the LADN, causing a waste of the network resource.

Based on the foregoing reasons, in S1103, after the session management functional entity receives the first notification message from the mobility management functional entity, if the session management functional entity determines, based on the first notification message, that the UE has left the area covered by the LADN, the session management functional entity may trigger the first session operation, to prevent the UE from continuing to perform data transmission by using the LADN session in the active state after the UE leaves the area covered by the LADN, release the network resource occupied by the LADN session, and improve network resource utilization. The first session operation in S1103 includes releasing the LADN session or deactivating the LADN session. Herein, that the session management functional entity releases the LADN session includes two cases. The following describes in detail several cases included in the first session operation.

Case 1: If the first session operation includes deactivating the LADN session, the session management functional entity sends, to the mobility management functional entity, a message for instructing to release an air interface resource occupied by the LADN session, the mobility management functional entity forwards the message to a radio access network, and the radio access network interacts with the UE to release the air interface resource occupied by the LADN session. It should be noted that, in the case 1, a method used by the session management functional entity to trigger deactivation of the LADN session is similar to the method, in S302, used by the session management functional entity to trigger deactivation of the LADN session. For the specific implementation method, in the case 1, used by the session management functional entity to trigger deactivation of the LADN session, refer to the method, in S302, used by the session management functional entity to trigger deactivation of the LADN session. Details are not repeated herein.

Case 2: If the first session operation includes releasing the LADN session, that the session management functional entity releases the LADN session based on the first notification message is specifically: The session management functional entity may directly release the LADN session based on the first notification message.

It should be noted that, for a specific process in which the session management functional entity releases the LADN session in the case 2, reference may be made to the prior art. Details are not described herein.

Case 3: If the first session operation includes releasing the LADN session, that the session management functional entity releases the LADN session based on the first notification message is specifically: The session management functional entity triggers, based on the first notification message, deactivation of the LADN session, and determines, within preset duration and depending on whether the UE re-enters the area covered by the LADN, whether to release the LADN session. If the session management functional entity has not detected, within the preset duration, that the UE re-enters the area covered by the LADN, the session management functional entity determines not to release the LADN session.

The following describes in detail methods in the case 3 that are used by the session management functional entity to determine, within the preset duration, whether the UE has re-entered the area covered by the LADN.

Method 1: If the event in the event subscription request sent by the session management functional entity to the mobility management functional entity includes that the UE enters the area covered by the LADN, the session management functional entity may determine, based on a second notification message from the mobility management functional entity, whether the UE has re-entered, within the preset duration, the area covered by the LADN. The second notification message is used to notify that the UE has entered the area covered by the LADN. Specifically, if the session management functional entity receives the second notification message from the mobility management functional entity within the preset duration, it indicates that the UE has re-entered the area covered by the LADN, so that the session management functional entity can determine, based on the second notification message, not to release the LADN session; if the session management functional entity does not receive the second notification message from the mobility management functional entity within the preset duration, it indicates that the UE has not re-entered, within the preset duration, the area covered by the LADN, so that the session management functional entity can release the LADN session.

Method 2: The session management functional entity determines, based on the location information of the UE and the pre-stored information about the area covered by the LADN, whether the UE has re-entered, within the preset duration, the area covered by the LADN.

It should be noted that, a specific implementation method, in the method 2, used by the session management functional entity to determine, within the preset duration and depending on whether the UE re-enters the area covered by the LADN, whether to release the LADN session is similar to the method, in S303, used by the session management functional entity to determine whether to release the LADN session. For details, refer to the method, in S303, used by the session management functional entity to determine whether to release the LADN session. Details are not repeated herein.

Optionally, in the case 3, a timer may be used for timing the preset duration.

After the session management functional entity releases the LADN session in the foregoing case 2 and case 3, the session management functional entity may send, to the mobility management functional entity, a request for unsubscribing to the event. If the event in the event subscription request includes only that the UE leaves the area covered by the LADN, the session management functional entity may send, to the mobility management functional entity, a request for unsubscribing to this type of event. If the event in the event subscription request includes that the UE leaves the area covered by the LADN and that the UE enters the area covered by the LADN, the session management functional entity may send, to the mobility management functional entity, a request for unsubscribing to the two types of events, or may send, to the mobility management functional entity, a request for unsubscribing to any one of the two types of events.

Optionally, if the event in the event subscription request includes that the UE enters the area covered by the LADN, after the session management functional entity sends the event subscription request to the mobility management functional entity, if determining that the UE has re-entered the area covered by the LADN, the mobility management functional entity sends the second notification message to the session management functional entity. After the session management functional entity receives the second notification message from the mobility management functional entity, if determining, based on the second notification message, that the UE has re-entered the area covered by the LADN, the session management functional entity may trigger a second session operation, where the second session operation includes activating the LADN session or triggering establishment of an LADN session between the UE and the LADN. The following describes in detail several cases included in the second session operation:
Case 1: When the session management functional entity triggers, based on the first notification message, deactivation of the LADN session, and the session management functional entity determines, based on the second notification message, that the UE has re-entered the area covered by the LADN, because the LADN session is in an inactive state at this time, if the session management functional entity receives, from the UE, an SR message for requesting to perform data transmission by using the LADN session, the session management functional entity may activate the LADN session deactivated by the session management functional entity based on the first notification message, so that the UE can perform data transmission directly by using the activated LADN session.
Case 2: When the session management functional entity releases the LADN session based on the first notification message, after the session management functional entity determines, based on the second notification message, that the UE has re-entered the area covered by the LADN, because the LADN session established before the UE leaves the area covered by the LADN has been released, if the session management functional entity receives, from the UE, a message for requesting to establish an LADN session between the UE and the LADN, the session management functional entity may trigger establishment of an LADN session between the UE and the LADN, and returns, to the UE, a response message for indicating that the LADN session between the UE and the LADN has been successfully established, so that the UE can perform data transmission by using the established LADN session.

The following describes, by using the 5G system shown in FIG. 2 as an example, the session processing method provided in this implementation of this disclosure.

### Example 5:

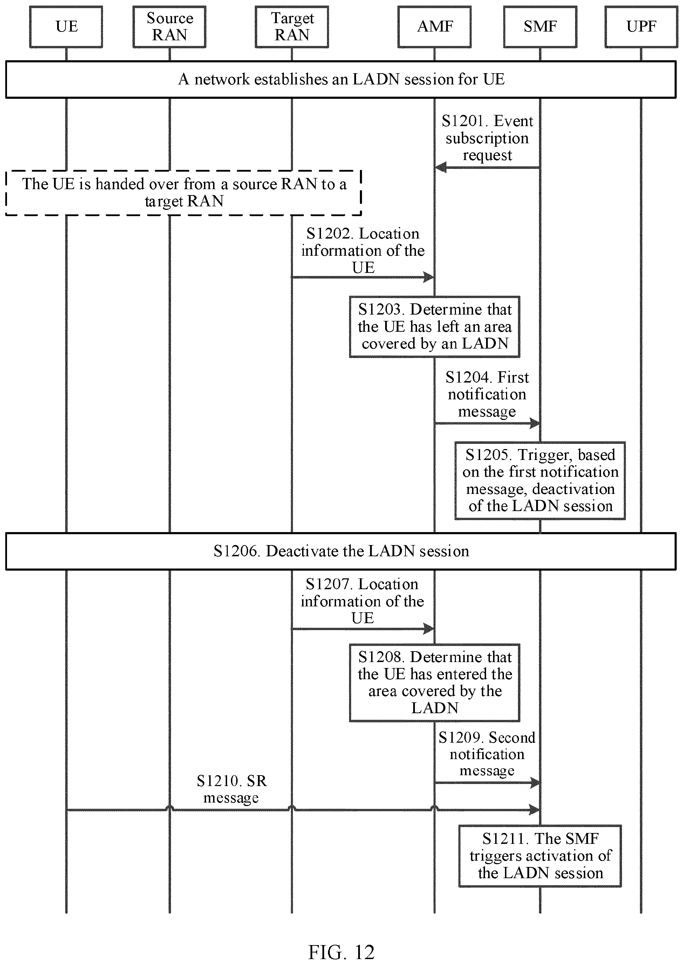

A process of processing an LADN session by using an independent information exchange process in the 5G system shown in FIG. 2 is used as an example. In this process, the first session operation triggered by the session management functional entity is deactivating the LADN session. Network elements in the 5G system that are used in the session processing method provided in this implementation of this disclosure include a source RAN, a target RAN, the AMF, the SMF, the UPF, and the like. As shown in FIG. 12, a process of interaction between the network elements is as follows:
S1201. The SMF sends an event subscription request to the AMF.

After a network establishes an LADN session for UE, the SMF sends the event subscription request to the AMF, where the event includes that the UE leaves an area covered by an LADN. Optionally, the event may further include that the UE enters the area covered by the LADN.
S1202. The target RAN sends location information of UE to the AMF.

After the UE is handed over from the source RAN to the target RAN, the target RAN sends the location information of the UE to the AMF.
S1203. The AMF determines that the UE has left an area covered by an LADN.
S1204. The AMF sends a first notification message to the SMF.

The first notification message sent by the AMF to the SMF may be used to notify that the UE has left the area covered by the LADN.

Optionally, the AMF may send a session update request message to the SMF in S1204, where the session update request message may include information for indicating that the UE has left the area covered by the LADN.
S1205. The SMF triggers, based on the first notification message, deactivation of an LADN session.

That the SMF triggers deactivation of the LADN session includes releasing an air interface resource and an N3 tunnel resource of the LADN session. In S1205, a process in which the AMF and the target RAN release the air interface resource of the LADN session is similar to the four steps S405 to S408 in the interaction process shown in FIG. 4A and FIG. 4B, and a process in which the UPF releases the N3 tunnel resource of the LADN session is similar to the two steps S409 and S410 in the interaction process shown in FIG. 4A and FIG. 4B. Details are not repeated herein.
S1206. Deactivate the LADN session.
S1207. The target RAN sends location information of the UE to the AMF
S1208. The AMF determines that the UE has entered the area covered by the LADN.
S1209. The AMF sends a second notification message to the SMF

The second notification message sent by the AMF to the SMF may be used to notify that the UE has entered the area covered by the LADN.

### S1210. The UE sends an SR message to the SMF

The SR message sent by the UE to the SMF may be used to request, for the UE, to perform data transmission by using the LADN session.

It should be noted that a sequence for performing the two steps S1209 and S1210 is not limited in this implementation.

51211. The SMF triggers activation of the LADN session deactivated by the SMF based on the first notification message.

For a process in which the SMF triggers activation of the LADN session in S1211, refer to the prior art. Details are not described herein.

It should be noted that, in this implementation, steps S1206 to S1211 are performed if the event in the event subscription request sent by the SMF to the AMF in S1201 includes that the UE enters the area covered by the LADN.

For specific implementation methods of the steps in the process of interaction between the network elements shown in FIG. 12, refer to the related descriptions of S801 to S803. Details are not repeated herein.

### Example 6:

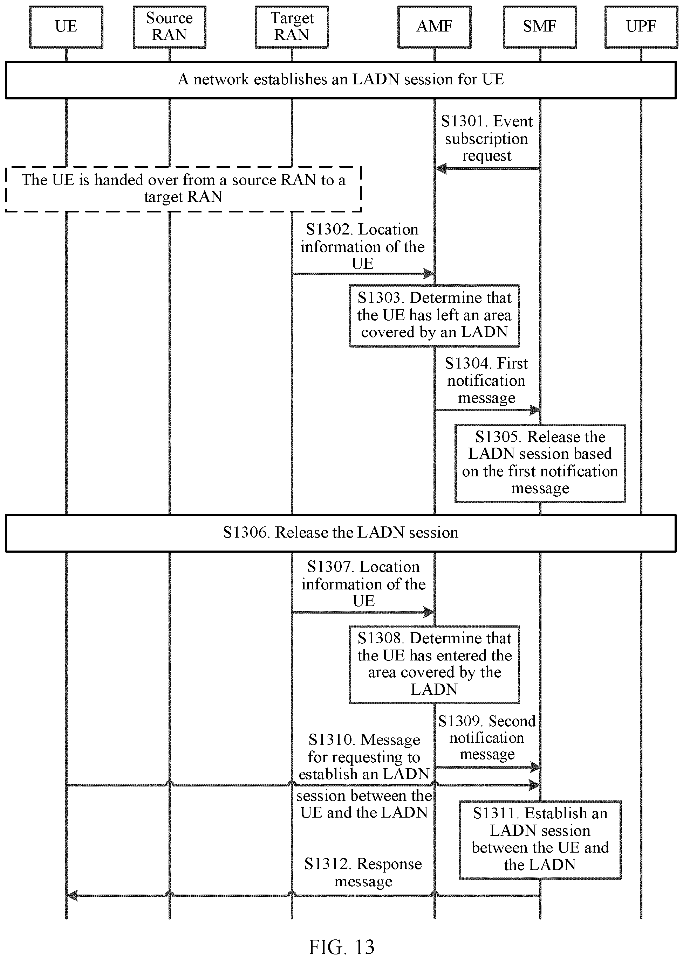

A process of processing an LADN session by using an independent information exchange process in the 5G system shown in FIG. 2 is used as an example. Network elements in the 5G system that are used in the session processing method provided in this implementation of this disclosure include a source RAN, a target RAN, the AMF, the SMF, the UPF, and the like. A process of interaction between the network elements is shown in FIG. 13. In this interaction process, the first session operation triggered by the session management functional entity is releasing the LADN session. The interaction process shown in FIG. 13 is similar to the interaction process shown in FIG. 12. A similar part between the two interaction processes is not described, and a main difference between the two interaction processes lies in the following several steps.

### S1305. The SMF releases an LADN session based on the first notification message.

For processes of releasing the LADN session in S1305 and S1306, refer to the related descriptions of steps S413 to S415 in the process of interaction between the network elements shown in FIG. 4A and FIG. 4B. Details are not repeated herein.

Optionally, after the SMF releases the LADN session, the SMF sends, to the AMF, a request message for unsubscribing to the event. If the SMF sends, to the AMF, a request message for unsubscribing to the event that the UE enters the area covered by the LADN, steps S1310 to S1312 are not performed.

### S1310. The UE sends, to the SMF, a message for requesting to establish an LADN session between the UE and the LADN.

It should be noted that a sequence for performing the two steps S1309 and S1310 is not limited in this implementation.

51311. The SMF establishes an LADN session between the UE and the LADN.

For a process of establishing the LADN session between the UE and the LADN in S1311, refer to the prior art. Details are not described herein.

### S1312. The SMF returns a response message to the UE.

The response message is used to indicate that the LADN session between the UE and the LADN has been successfully established.

For specific implementation methods of steps S1301 to S1304 and S1306 to S1309 in the process of interaction between the network elements shown in FIG. 13, refer to the related descriptions of the process of interaction between the network elements shown in FIG. 12. Details are not repeated herein.

### Example 7:

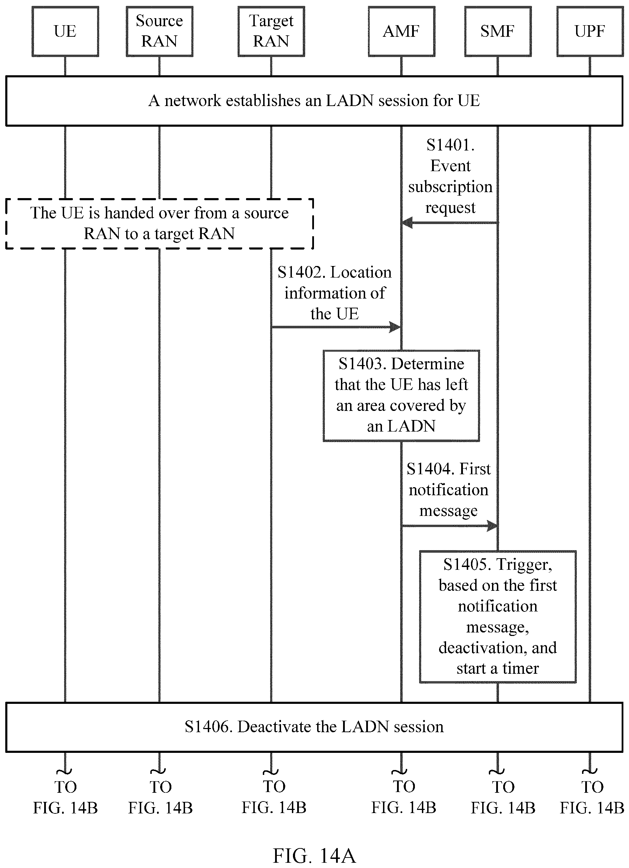

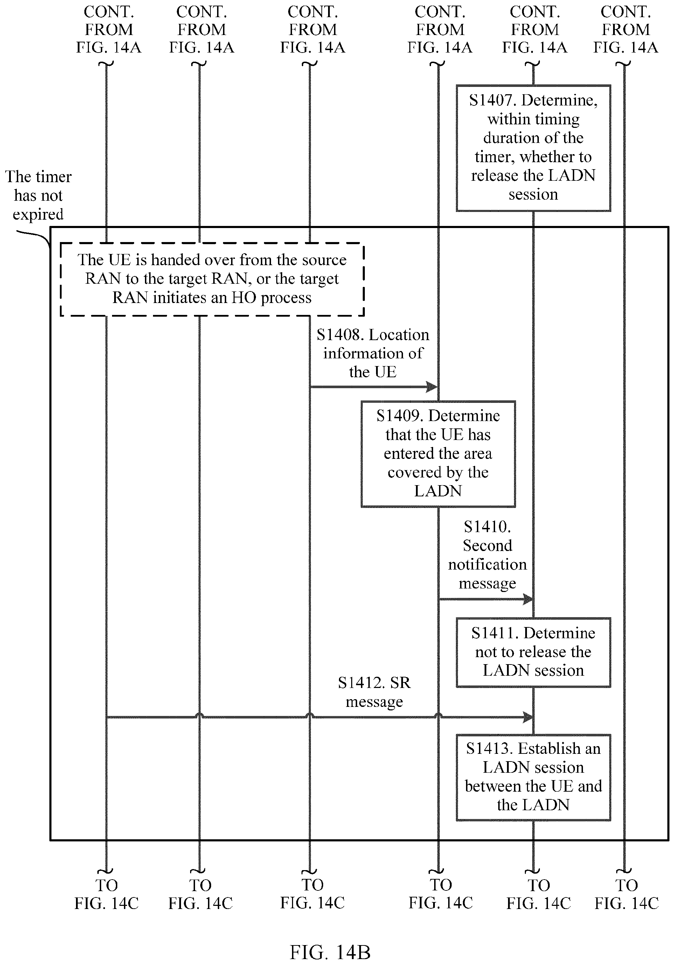

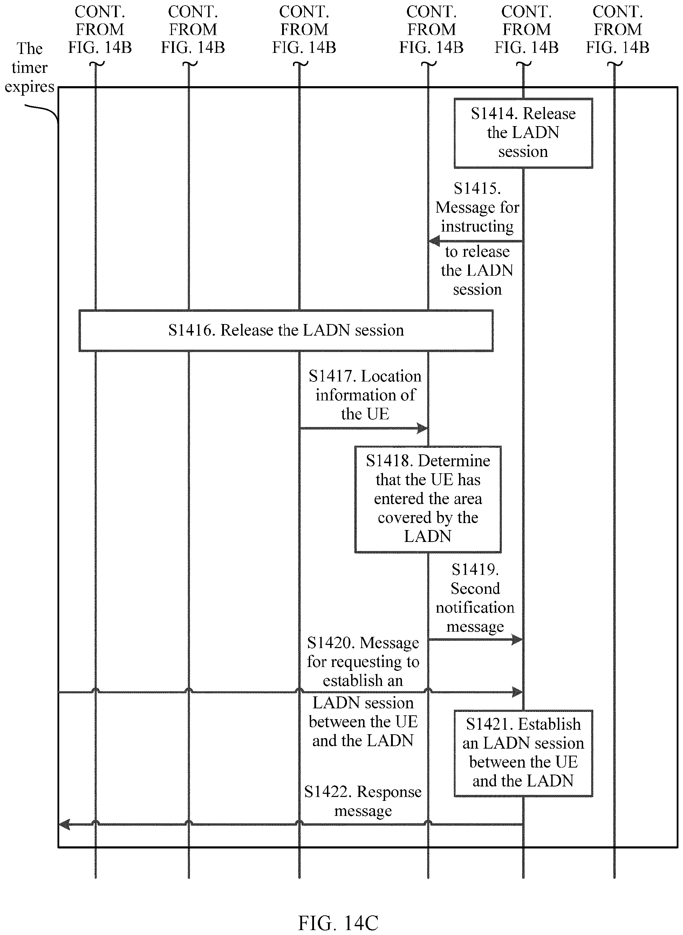

A process of processing an LADN session by using an independent information exchange process in the 5G system shown in FIG. 2 is used as an example. In this interaction process, the first session operation triggered by the session management functional entity is releasing the LADN session. Network elements in the 5G system that are used in the session processing method provided in this implementation of this disclosure include a source RAN, a target RAN, the AMF, the SMF, the UPF, and the like. A process of interaction between the network elements is shown in FIG. 14A, FIG. 14B, and FIG. 14C. The interaction process shown in FIG. 14A, FIG. 14B, and FIG. 14C is similar to the interaction processes shown in FIG. 12 and FIG. 13. A similar part between the interaction process shown in FIG. 14A, FIG. 14B, and FIG. 14C and the interaction processes shown in FIG. 12 and FIG. 13 is not described, and a main difference between the interaction process shown in FIG. 14A, FIG. 14B, and FIG. 14C and the interaction processes shown in FIG. 12 and FIG. 13 lies in the following several steps.

S1405. The SMF triggers, based on the first notification message, deactivation of an LADN session, and starts a timer.

The SMF triggers, based on the first notification message, deactivation of the LADN session, and starts the timer whose timing duration is preset duration. A start moment of the timing duration may be a moment at which the SMF determines, based on the first notification message, that the UE has left the area covered by the LADN.

For a specific implementation method of S1406 in the process of interaction between the network elements shown in FIG. 14A, FIG. 14B, and FIG. 14C, refer to the related description of S1206 in the process of interaction between the network elements shown in FIG. 12. Details are not repeated herein.

S1407. The SMF determines, within timing duration of the timer and depending on a result of detecting whether the UE re-enters the area covered by the LADN, whether to release the LADN session.

If the SMF detects, within the timing duration of the timer, that the UE re-enters the area covered by the LADN, S1411 is performed. If the SMF has not detected, within the timing duration of the timer, that the UE re-enters the area covered by the LADN, S1414 is performed.

For specific implementation methods of steps S1408 to S1410 in the process of interaction between the network elements shown in FIG. 14A, FIG. 14B, and FIG. 14C, refer to the related descriptions of S1206 to S1208 in the process of interaction between the network elements shown in FIG. 12. Details are not repeated herein.

S1411. The SMF determines not to release the LADN session.

Before the timer expires, or in other words, within the timing duration of the timer, if the SMF receives the second notification message, the SMF determines not to release the LADN session, and turns off the timer.

For specific implementation methods of steps S1412 and S1413 in the process of interaction between the network elements shown in FIG. 14A, FIG. 14B, and FIG. 14C, refer to the related descriptions of S1210 and S1211 in the process of interaction between the network elements shown in FIG. 12. Details are not repeated herein.

It should be noted that S1410 needs to be performed before S1411, and S1412 needs to be performed before S1413, but a sequence between two steps S1410 and S1412 is not limited in this implementation. For example, a sequence for performing steps S1410 to S1413 may be: S1412, S1410, S1411, and S1413.

S1414. The SMF releases the LADN session.

If the SMF has not received the second notification message when the timer expires, the SMF releases the LADN session. Optionally, after the SMF releases the LADN session, the SMF sends, to the AMF, a request message for unsubscribing to the event.

For processes of releasing the LADN session in S1414 to S1416, refer to the related descriptions of steps S413 to S415 in the process of interaction between the network elements shown in FIG. 4A and FIG. 4B. Details are not repeated herein.

For specific implementation methods of steps S1417 to S1422 in the process of interaction between the network elements shown in FIG. 14A, FIG. 14B, and FIG. 14C, refer to the related descriptions of steps S1307 to S1312 in the process of interaction between the network elements shown in FIG. 13. Details are not repeated herein.

According to the technical solution provided in this implementation of this disclosure, a network resource occupied by the LADN session can be properly utilized, and network resource utilization can be improved.

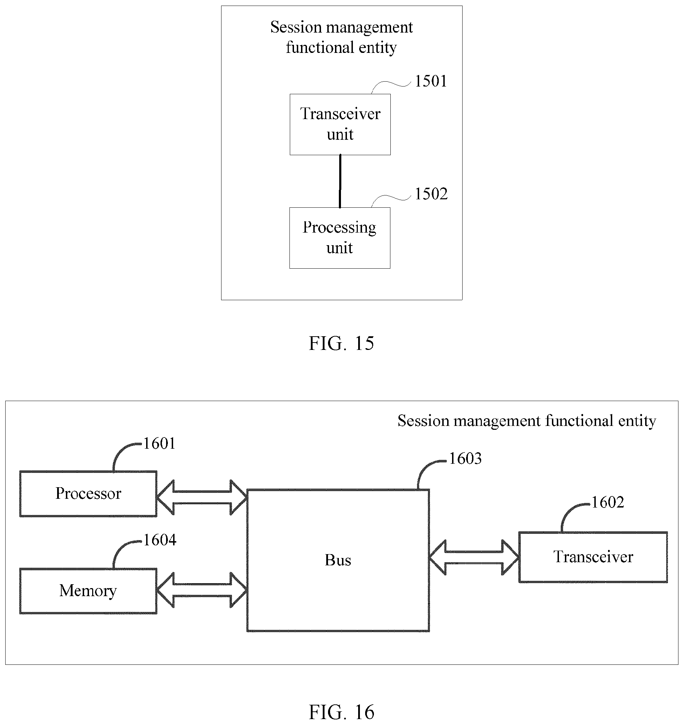

Based on a same application concept, an implementation of this disclosure further provides a session management functional entity. The session management functional entity can implement the methods provided in the implementations corresponding to FIG. 11 to FIG. 14C. As shown in FIG. 15, the session management functional entity includes a transceiver unit 1501 and a processing unit 1502.

The transceiver unit 1501 is configured to: send an event subscription request to a mobility management functional entity, where an event includes that user equipment UE leaves an area covered by a local area data network LADN; and receive, from the mobility management functional entity, a first notification message for notifying that the UE has left the area covered by the LADN.

The processing unit 1502 is configured to trigger a first session operation based on the first notification message received by the transceiver unit 1501, where the first session operation includes releasing an LADN session or deactivating an LADN session, and the LADN session is a session used by the UE to perform data transmission in the area covered by the LADN. Optionally, the processing unit 1502 is specifically configured to: if the first session operation includes releasing the LADN session, release the LADN session based on the first notification message; or if the first session operation includes releasing the LADN session, trigger, based on the first notification message by using the transceiver unit 1501, deactivation of the LADN session, and determine, within preset duration and depending on whether the UE re-enters the area covered by the LADN, whether to release the LADN session.

Optionally, when the session management functional entity determines, within the preset duration and depending on whether the UE re-enters the area covered by the LADN, whether to release the LADN session, the processing unit 1502 is specifically configured to: release the LADN session if the UE does not re-enter, within the preset duration, the area covered by the LADN; or if the UE re-enters, within the preset duration, the area covered by the LADN, determine not to release the LADN session.

Optionally, the transceiver unit 1501 is further configured to: after the processing unit 1502 releases the LADN session, send, to the mobility management functional entity, a request for unsubscribing to the event.

The processing unit 1502 is configured to: if the first session operation includes deactivating the LADN session, send, to the mobility management functional entity by using the transceiver unit 1501, a message for instructing to release an air interface resource of the LADN session. Optionally, the event may further include that the UE enters the area covered by the LADN. Optionally, the transceiver unit 1501 is further configured to: after sending the event subscription request to the mobility management functional entity, receive, from the mobility management functional entity, a second notification message for notifying that the UE has entered the area covered by the LADN; and the processing unit 1502 is further configured to trigger a second session operation based on the second notification message after the transceiver unit 1501 receives the second notification message, where the second session operation includes activating the LADN session or triggering establishment of an LADN session between the UE to the LADN. Optionally, when triggering the second session operation based on the second notification message, the processing unit 1502 is specifically configured to: if the first session operation includes deactivating the LADN session, and if a service request SR message for requesting to perform data transmission by using the LADN session is received from the UE by using the transceiver unit 1501, activate, based on the second notification message by using the transceiver unit 1501, the LADN session deactivated by the session management functional entity based on the first notification message.

Optionally, when triggering the second session operation based on the second notification message, the processing unit 1502 is specifically configured to:
if the first session operation includes releasing the LADN session, and if a message for requesting to establish an LADN session between the UE and the LADN is received from the UE by using the transceiver unit 1501, trigger establishment of an LADN session between the UE and the LADN based on the second notification message.

An implementation of this disclosure further provides a session management functional entity. The session management functional entity has a function of implementing the methods provided in the implementations corresponding to FIG. 11 to FIG. 14C to implement operations of the session management functional entity in the implementations corresponding to FIG. 11 to FIG. 14C. The function may be implemented by using hardware. The session management functional entity may be an apparatus the same as the session management functional entity shown in FIG. 15. As shown in FIG. 16, the session management functional entity includes a processor 1601, a transceiver 1602, a bus 1603, and a memory 1604. The processor 1601, the memory, and the transceiver 1602 are connected to each other by using the bus. The memory 1604 is configured to store a computer readable program. The processor 1601 invokes an instruction in the memory 1604 to execute the methods in the implementations corresponding to FIG. 11 to FIG. 14C, to implement a function of the processing unit in the session management functional entity shown in FIG. 15. The transceiver 1602 is configured to receive data and/or send data under control of the processor 1601, to implement a function of the transceiver unit in the session management functional entity shown in FIG. 15.

An implementation of this disclosure further provides a computer storage medium. The storage medium stores a software program. When being read and executed by one or more processors, the software program can implement the methods executed by the session management functional entity in the foregoing implementations.

An implementation of this disclosure provides a computer program product including an instruction. When the product runs on a computer, the computer can execute the session processing methods executed by the session management functional entity in the foregoing implementations. A person skilled in the art should understand that the implementations of this disclosure may be provided as a method, a system, or a computer program product. Therefore, this disclosure may use a form of hardware only implementations, software only implementations, or implementations with a combination of software and hardware. Moreover, this disclosure may use a form of a computer program product that is implemented on one or more computer-usable storage media (including but not limited to a disk memory, a CD-ROM, an optical memory) that include computer usable program code.

This disclosure is described with reference to the flowcharts and/or block diagrams of the method, the device (system), and the computer program product according to this disclosure. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specified function in one or more processes in the flowcharts and/or in one or more blocks in the block diagrams.

These computer program instructions may alternatively be stored in a computer readable memory that can instruct the computer or any other programmable data processing device to work in a specific manner, so that the instructions stored in the computer readable memory generate an artifact that includes an instruction apparatus. The instruction apparatus implements a specified function in one or more processes in the flowcharts and/or in one or more blocks in the block diagrams.

These computer program instructions may alternatively be loaded onto a computer or another programmable data processing device, so that a series of operations and steps are performed on the computer or the other programmable device, thereby generating computer-implemented processing. Therefore, the instructions executed on the computer or the other programmable device provide steps for implementing a specified function in one or more processes in the flowcharts and/or in one or more blocks in the block diagrams.

## Claims

1. A session processing method, comprising:
sending (1101), by a session management functional entity (102), an event subscription request to a mobility management functional entity (101) to subscribe an event, wherein the event subscription request comprises an identifier of a user equipment, UE, and an identifier of a local area data network, LADN, wherein the event comprises that the UE leaves an area covered by the LADN, and wherein the identifier of the LADN is a local data network name;
receiving (1102), by the session management functional entity (102) from the mobility management functional entity (101), a first notification message for notifying that the UE has left the area covered by the LADN; and
triggering (1103), by the session management functional entity (102), a first session operation based on the first notification message, wherein the first session operation comprises releasing an LADN session or deactivating an LADN session, and the LADN session is a session used by the UE to perform data transmission in the area covered by the LADN, **characterised in that**
if the first session operation comprises deactivating the LADN session, the triggering, by the session management functional entity (102), a first session operation based on the first notification message comprises: sending, by the session management functional entity (102) to the mobility management functional entity (101), a message for instructing to release an air interface resource of the LADN session.

2. The method according to claim 1, wherein if the first session operation comprises releasing the LADN session, the triggering, by the session management functional entity (102), a first session operation based on the first notification message comprises:
releasing, by the session management functional entity (102), the LADN session based on the first notification message.

3. The method according to claim 1, wherein if the first session operation comprises releasing the LADN session, the triggering, by the session management functional entity (102), a first session operation based on the first notification message comprises:
triggering, by the session management functional entity (102), deactivation of the LADN session based on the first notification message, and determining, within preset duration and depending on whether the UE re-enters the area covered by the LADN, whether to release the LADN session.

4. The method according to claim 3, wherein the determining, by the session management functional entity (102) within preset duration and depending on whether the UE re-enters the area covered by the LADN, whether to release the LADN session specifically comprises:
if the UE does not re-enter, within the preset duration, the area covered by the LADN, releasing, by the session management functional entity (102), the LADN session; or
if the UE re-enters, within the preset duration, the area covered by the LADN, determining, by the session management functional entity (102), not to release the LADN session.

5. The method according to any one of claims 1 to 4, wherein the event further comprises that the UE enters the area covered by the LADN.

6. The method according to claim 5, wherein after the sending, by a session management functional entity (102), an event subscription request to a mobility management functional entity (101), the method further comprises:
receiving, by the session management functional entity (102) from the mobility management functional entity (101), a second notification message for notifying that the UE has entered the area covered by the LADN; and
triggering, by the session management functional entity (102), a second session operation based on the second notification message, wherein the second session operation comprises activating the LADN session or triggering establishment of an LADN session between the UE and the LADN.

7. The method according to claim 6, wherein if the first session operation comprises deactivating the LADN session, the triggering, by the session management functional entity (102), a second session operation based on the second notification message comprises:
if receiving, from the UE, a service request, SR, message for requesting to perform data transmission by using the LADN session, activating, by the session management functional entity (102) based on the second notification message, the LADN session deactivated by the session management functional entity (102) based on the first notification message.

8. The method according to claim 6, wherein if the first session operation comprises releasing the LADN session, the triggering, by the session management functional entity (102), a second session operation based on the second notification message comprises:
if receiving, from the UE, a message for requesting to establish an LADN session between the UE and the LADN, triggering, by the session management functional entity (102), establishment of an LADN session between the UE and the LADN based on the second notification message.

9. A session management functional entity (102), configured to perform the method of any of claims 1 to 8.

10. A session processing system, wherein the system comprises a session management functional entity (102) and a mobility management functional entity (101), wherein
the session management functional entity (102) is configured to send an event subscription request to the mobility management functional entity (101) to subscribe an event, wherein the event subscription request comprises an identifier of a user equipment, UE, and an identifier of a local area data network, LADN, wherein the event comprises that the UE leaves an area covered by the LADN, and wherein the identifier of the LADN is a local data network name;
the mobility management functional entity (101) is configured to: receive the event subscription request sent by the session management functional entity (102); and if determining that the UE has left the area covered by the LADN, send, to the session management functional entity (102), a first notification message for notifying that the UE has left the area covered by the LADN; and
the session management functional entity (102) is further configured to: receive the first notification message from the mobility management functional entity (101), and trigger a first session operation based on the first notification message, wherein the first session operation comprises releasing an LADN session or deactivating an LADN session, and the LADN session is a session used by the UE to perform data transmission in the area covered by the LADN,
wherein the session management functional entity (102) is configured to trigger a first session operation based on the first notification message, and it is further **characterized in** being configured to: if the first session
operation comprises deactivating the LADN session, send, to the mobility management functional entity (101), a message for instructing to release an air interface resource of the LADN session.

11. The session processing system according to claim 10, wherein if the first session operation comprises releasing the LADN session, wherein the session management functional entity (102) is configured to trigger a first session operation based on the first notification message comprises:
wherein the session management functional entity (102) is configured to release the LADN session based on the first notification message.

12. The session processing system according to claim 10, wherein if the first session operation comprises releasing the LADN session, wherein the session management functional entity (102) is configured to trigger a first session operation based on the first notification message comprises:
wherein the session management functional entity (102) is configured to trigger deactivation of the LADN session based on the first notification message, and determine, within preset duration and depending on whether the UE re-enters the area covered by the LADN, whether to release the LADN session.

13. The session processing system according to claim 12, wherein the session management functional entity (102) is configured to determine, within preset duration and depending on whether the UE re-enters the area covered by the LADN, whether to release the LADN session comprises:
wherein the session management functional entity (102) is configured to release the LADN session if the UE does not re-enter, within the preset duration, the area covered by the LADN; or determine not to release the LADN session if the UE re-enters, within the preset duration, the area covered by the LADN.

## Patentansprüche

1. Sitzungsverarbeitungsverfahren, umfassend:
Senden (1101) einer Ereignissubskriptionsanforderung durch eine Sitzungsverwaltungs-Funktionsentität (102) zu einer Mobilitätsverwaltungs-Funktionsentität (101), um ein Ereignis zu subskribieren, wobei die Ereignissubskriptionsanforderung eine Kennung eines Benutzergeräts UE und eine Kennung eines lokalen Datennetzwerks LADN umfasst, wobei das Ereignis umfasst, dass das UE einen durch das LADN abgedeckten Bereich verlässt, und wobei die Kennung des LADN ein lokaler Datennetzwerkname ist;
Empfangen (1102) einer ersten Benachrichtigungsnachricht durch die Sitzungsverwaltungs-Funktionsentität (102) von der Mobilitätsverwaltungs-Funktionsentität (101) zur Benachrichtigung, dass das UE den durch das LADN abgedeckten Bereich verlassen hat; und
Auslösen (1103) einer ersten Sitzungsoperation durch die Sitzungsverwaltungs-Funktionsentität (102) auf der Basis der ersten Benachrichtigungsnachricht, wobei die erste Sitzungsoperation Freigeben einer LADN-Sitzung oder Deaktivieren einer LADN-Sitzung umfasst und die LADN-Sitzung eine Sitzung ist, die durch das UE zur Durchführung von Datenübertragung in dem durch das LADN abgedeckten Bereich verwendet wird, **dadurch gekennzeichnet, dass**
wenn die erste Sitzungsoperation Deaktivieren der LADN-Sitzung umfasst, das Auslösen einer ersten Sitzungsoperation durch die Sitzungsverwaltungs-Funktionsentität (102) auf der Basis der ersten Benachrichtigungsnachricht Folgendes umfasst: Senden einer Nachricht durch die Sitzungsverwaltungs-Funktionsentität (102) zu der Mobilitätsverwaltungs-Funktionsentität (101), um anzuweisen, eine Funkschnittstellenressource der LADN-Sitzung freizugeben.

2. Verfahren nach Anspruch 1, wobei, wenn die erste Sitzungsoperation Freigeben der LADN-Sitzung umfasst, das Auslösen einer ersten Sitzungsoperation durch die Sitzungsverwaltungs-Funktionsentität (102) auf der Basis der ersten Benachrichtigungsnachricht Folgendes umfasst:
Freigeben der LADN-Sitzung durch die Sitzungsverwaltungs-Funktionsentität (102) auf der Basis der ersten Benachrichtigungsnachricht.

3. Verfahren nach Anspruch 1, wobei, wenn die erste Sitzungsoperation Freigeben der LADN-Sitzung umfasst, das Auslösen einer ersten Sitzungsoperation durch die Sitzungsverwaltungs-Funktionsentität (102) auf der Basis der ersten Benachrichtigungsnachricht Folgendes umfasst:
Auslösen von Deaktivierung der LADN-Sitzung durch die Sitzungsverwaltungs-Funktionsentität (102) auf der Basis der ersten Benachrichtigungsnachricht und Bestimmen, ob die LADN-Sitzung freizugeben ist, innerhalb einer voreingestellten Dauer und abhängig davon, ob das UE wieder in den durch das LADN abgedeckten Bereich eintritt.

4. Verfahren nach Anspruch 3, wobei das Bestimmen durch die Sitzungsverwaltungs-Funktionsentität (102) innerhalb der voreingestellten Dauer und abhängig davon, ob das UE wieder in den durch das LADN abgedeckten Bereich eintritt, ob die LADN-Sitzung freizugeben ist, speziell Folgendes umfasst:
wenn das UE innerhalb der voreingestellten Dauer nicht in den durch das LADN abgedeckten Bereich wieder eintritt, Freigeben der LADN-Sitzung durch die Sitzungsverwaltungs-Funktionsentität (102); oder
wenn das UE innerhalb der voreingestellten Dauer in dem durch das LADN abgedeckten Bereich wieder eintritt, Bestimmen durch die Sitzungsverwaltungs-Funktionsentität (102), die LADN-Sitzung nicht freizugeben.

5. Verfahren nach einem der Ansprüche 1 bis 4, wobei das Ereignis ferner umfasst, dass das UE in den durch das LADN abgedeckten Bereich eintritt.

6. Verfahren nach Anspruch 5, wobei das Verfahren nach dem Senden einer Ereignissubskriptionsanforderung durch eine Sitzungsverwaltungs-Funktionsentität (102) zu einer Mobilitätsverwaltungs-Funktionsentität (101) ferner Folgendes umfasst:
Empfangen einer zweiten Benachrichtigungsnachricht durch die Sitzungsverwaltungs-Funktionsentität (102) von der Mobilitätsverwaltungs-Funktionsentität (101) zur Benachrichtigung, dass das UE in den durch das LADN abgedeckten Bereich eingetreten ist; und
Triggern einer zweiten Sitzungsoperation durch die Sitzungsverwaltungs-Funktionsentität (102) auf der Basis der zweiten Benachrichtigungsnachricht, wobei die zweite Sitzungsoperation Aktivieren der LADN-Sitzung oder Auslösen der Herstellung einer LADN-Sitzung zwischen dem UE und dem LADN umfasst.

7. Verfahren nach Anspruch 6, wobei, wenn die erste Sitzungsoperation Deaktivieren der LADN-Sitzung umfasst, das Auslösen einer zweiten Sitzungsoperation durch die Sitzungsverwaltungs-Funktionsentität (102) auf der Basis der zweiten Benachrichtigungsnachricht Folgendes umfasst:
wenn von dem UE eine Dienstanforderungs- bzw. SR-Nachricht empfangen wird, um anzufordern, Datenübertragung durch Verwendung der LADN-Sitzung durchzuführen, Aktivieren der durch die Sitzungsverwaltungs-Funktionsentität (102) auf der Basis der ersten Benachrichtigungsnachricht deaktivierten LADN-Sitzung durch die Sitzungsverwaltungs-Funktionsentität (102) auf der Basis der zweiten Benachrichtigungsnachricht.

8. Verfahren nach Anspruch 6, wobei, wenn die erste Sitzungsoperation Freigeben der LADN-Sitzung umfasst, das Auslösen einer zweiten Sitzungsoperation durch die Sitzungsverwaltungs-Funktionsentität (102) auf der Basis der zweiten Benachrichtigungsnachricht Folgendes umfasst:
wenn von dem UE eine Nachricht empfangen wird, um anzufordern, eine LADN-Sitzung zwischen dem UE und dem LADN herzustellen, Auslösen der Herstellung einer LADN-Sitzung zwischen dem UE und dem LADN durch die Sitzungsverwaltungs-Funktionsentität (102) auf der Basis der zweiten Benachrichtigungsnachri cht.

9. Sitzungsverwaltungs-Funktionsentität (102), die dafür ausgelegt ist, das Verfahren nach einem der Ansprüche 1 bis 8 auszuführen.

10. Sitzungsverarbeitungssystem, wobei das System eine Sitzungsverwaltungs-Funktionsentität (102) und eine Mobilitätsverwaltungs-Funktionsentität (101) umfasst, wobei
die Sitzungsverwaltungs-Funktionsentität (102) ausgelegt ist zum Senden einer Ereignissubskriptionsanforderung zu der Mobilitätsverwaltungs-Funktionsentität (101), um ein Ereignis zu subskribieren, wobei die Ereignissubskriptionsanforderung eine Kennung eines Benutzergeräts UE und eine Kennung eines lokalen Datennetzwerks LADN umfasst, wobei das Ereignis umfasst, dass das UE einen durch das LADN abgedeckten Bereich verlässt, und wobei die Kennung des LADN ein lokaler Datennetzwerkname ist;
die Mobilitätsverwaltungs-Funktionsentität (101) ausgelegt ist zum Empfangen der durch die Sitzungsverwaltungs-Funktionsentität (102) gesendeten EreignisSubskriptionsanforderung; und wenn bestimmt wird, dass das UE den durch das LADN abgedeckten Bereich verlassen hat, Senden einer ersten Benachrichtigungsnachricht zu der Sitzungsverwaltungs-Funktionsentität (102) zur Benachrichtigung, dass das UE den durch das LADN abgedeckten Bereich verlassen hat; und
die Sitzungsverwaltungs-Funktionsentität (102) ferner ausgelegt ist zum Empfangen der ersten Benachrichtigungsnachricht von der Mobilitätsverwaltungs-Funktionsentität (101) und Auslösen einer ersten Sitzungsoperation auf der Basis der ersten Benachrichtigungsnachricht, wobei die erste Sitzungsoperation Freigeben einer LADN-Sitzung oder Deaktivieren einer LADN-Sitzung umfasst und die LADN-Sitzung eine Sitzung ist, die durch das UE verwendet wird, um Datenübertragung in dem durch das LADN abgedeckten Bereich durchzuführen, wobei die Sitzungsverwaltungs-Funktionsentität (102) ausgelegt ist zum Auslösen einer ersten Sitzungsoperation auf der Basis der ersten Benachrichtigungsnachricht und ferner **dadurch gekennzeichnet ist, dass** sie für Folgendes ausgelegt ist:
wenn die erste Sitzungsoperation Deaktivieren der LADN-Sitzung umfasst, Senden einer Nachricht zu der Mobilitätsverwaltungs-Funktionsentität (101), um anzuweisen, eine Funkschnittstellenressource der LADN-Sitzung freizugeben.

11. Sitzungsverarbeitungssystem nach Anspruch 10, wobei, wenn die erste Sitzungsoperation Freigeben der LADN-Sitzung umfasst, wobei, dass die Sitzungsverwaltungs-Funktionsentität (102) ausgelegt ist zum Auslösen einer ersten Sitzungsoperation auf der Basis der ersten Benachrichtigungsnachricht, Folgendes umfasst:
wobei die Sitzungsverwaltungs-Funktionsentität (102) ausgelegt ist zum Freigeben der LADN-Sitzung auf der Basis der ersten Benachrichtigungsnachricht.

12. Sitzungsverarbeitungssystem nach Anspruch 10, wobei, wenn die erste Sitzungsoperation Freigeben der LADN-Sitzung umfasst, wobei, dass die Sitzungsverwaltungs-Funktionsentität (102) ausgelegt ist zum Auslösen einer ersten Sitzungsoperation auf der Basis der ersten Benachrichtigungsnachricht, Folgendes umfasst:
wobei die Sitzungsverwaltungs-Funktionsentität (102) ausgelegt ist zum Auslösen von Deaktivierung der LADN-Sitzung auf der Basis der ersten Benachrichtigungsnachricht und Bestimmen, ob die LADN-Sitzung freizugeben ist, innerhalb einer voreingestellten Dauer und abhängig davon, ob das UE in den durch das LADN abgedeckten Bereich wieder eintritt.

13. Sitzungsverarbeitungssystem nach Anspruch 12, wobei, dass die Sitzungsverwaltungs-Funktionsentität (102) ausgelegt ist zum Bestimmen, ob die LADN-Sitzung freizugeben ist, innerhalb einer voreingestellten Dauer und abhängig davon, ob das UE in den durch das LADN abgedeckten Bereich wieder eintritt Folgendes umfasst:
wobei die Sitzungsverwaltungs-Funktionsentität (102) ausgelegt ist zum Freigeben der LADN-Sitzung, wenn das UE innerhalb der voreingestellten Dauer nicht in dem durch das LADN abgedeckten Bereich wieder eintritt; oder Bestimmen, die LADN-Sitzung nicht freizugeben, wenn das UE innerhalb der voreingestellten Dauer in den durch das LADN abgedeckten Bereich wieder eintritt.

## Revendications

1. Procédé de traitement de session, comprenant les étapes suivantes :
envoyer (1101), par une entité fonctionnelle de gestion de session (102), une demande de souscription à un événement à une entité fonctionnelle de gestion de la mobilité (101) pour souscrire à un événement, dans lequel la demande de souscription à un événement comprend un identifiant d'un équipement utilisateur, UE, et un identifiant d'un réseau local de données, LADN, dans lequel l'événement comprend le fait que l'UE quitte une zone couverte par le LADN, et dans lequel l'identifiant du LADN est un nom de réseau local de données ;
recevoir (1102), par l'entité fonctionnelle de gestion de session (102), depuis l'entité fonctionnelle de gestion de la mobilité (101), un premier message de notification pour notifier que l'UE a quitté la zone couverte par le LADN ; et
déclencher (1103), par l'entité fonctionnelle de gestion de session (102), une première opération de session sur la base du premier message de notification, dans lequel la première opération de session comprend la libération d'une session LADN ou la désactivation d'une session LADN, et la session LADN est une session utilisée par l'UE pour effectuer une transmission de données dans la zone couverte par le LADN, **caractérisé en ce que**
si la première opération de session comprend la désactivation de la session LADN, le déclenchement, par l'entité fonctionnelle de gestion de session (102), d'une première opération de session sur la base du premier message de notification comprend l'étape suivante : envoyer, par l'entité fonctionnelle de gestion de session (102), à l'entité fonctionnelle de gestion de la mobilité (101), un message pour donner pour instruction de libérer une ressource d'interface radio de la session LADN.

2. Procédé selon la revendication 1, dans lequel, si la première opération de session comprend la libération de la session LADN, le déclenchement, par l'entité fonctionnelle de gestion de session (102), d'une première opération de session sur la base du premier message de notification comprend l'étape suivante :
libérer, par l'entité fonctionnelle de gestion de session (102), la session LADN sur la base du premier message de notification.

3. Procédé selon la revendication 1, dans lequel, si la première opération de session comprend la libération de la session LADN, le déclenchement, par l'entité fonctionnelle de gestion de session (102), d'une première opération de session sur la base du premier message de notification comprend les étapes suivantes :
déclencher, par l'entité fonctionnelle de gestion de session (102), la désactivation de la session LADN sur la base du premier message de notification, et déterminer, au cours d'une durée prédéfinie et selon que l'UE pénètre à nouveau, ou non, dans la zone couverte par le LADN, s'il convient ou non de libérer la session LADN.

4. Procédé selon la revendication 3, dans lequel la détermination, par l'entité fonctionnelle de gestion de session (102), au cours d'une durée prédéfinie et selon que l'UE pénètre à nouveau, ou non, dans la zone couverte par le LADN, s'il convient ou non de libérer la session LADN comprend spécifiquement les étapes suivantes :
si l'UE ne pénètre pas à nouveau, au cours de la durée prédéfinie, dans la zone couverte par le LADN, libérer, par l'entité fonctionnelle de gestion de session (102), la session LADN ; ou
si l'UE pénètre à nouveau, au cours de la durée prédéfinie, dans la zone couverte par le LADN, déterminer, par l'entité fonctionnelle de gestion de session (102), de ne pas libérer la session LADN.

5. Procédé selon l'une quelconque des revendications 1 à 4, dans lequel l'événement comprend en outre le fait que l'UE pénètre dans la zone couverte par le LADN.

6. Procédé selon la revendication 5, après l'envoi, par une entité fonctionnelle de gestion de session (102), d'une demande de souscription à un événement à une entité fonctionnelle de gestion de la mobilité (101), le procédé comprenant en outre les étapes suivantes :
recevoir, par l'entité fonctionnelle de gestion de session (102), depuis l'entité fonctionnelle de gestion de la mobilité (101), un second message de notification pour notifier que l'UE est entré dans la zone couverte par le LADN ; et
déclencher, par l'entité fonctionnelle de gestion de session (102), une seconde opération de session sur la base du second message de notification, dans lequel la seconde opération de session comprend l'activation de la session LADN ou le déclenchement de l'établissement d'une session LADN entre l'UE et le LADN.

7. Procédé selon la revendication 6, dans lequel, si la première opération de session comprend la désactivation de la session LADN, le déclenchement, par l'entité fonctionnelle de gestion de session (102), d'une seconde opération de session sur la base du second message de notification comprend l'étape suivante :
en cas de réception, depuis l'UE, d'un message de demande de service, SR, pour demander d'effectuer une transmission de données en utilisant la session LADN, activer, par l'entité fonctionnelle de gestion de session (102), sur la base du second message de notification, la session LADN désactivée par l'entité fonctionnelle de gestion de session (102) sur la base du premier message de notification.

8. Procédé selon la revendication 6, dans lequel, si la première opération de session comprend la libération de la session LADN, le déclenchement, par l'entité fonctionnelle de gestion de session (102), d'une seconde opération de session sur la base du second message de notification comprend l'étape suivante :
en cas de réception, depuis l'UE, d'un message pour demander d'établir une session LADN entre l'UE et le LADN, déclencher, par l'entité fonctionnelle de gestion de session (102), l'établissement d'une session LADN entre l'UE et le LADN sur la base du second message de notification.

9. Entité fonctionnelle de gestion de session (102), configurée pour exécuter le procédé de l'une quelconque des revendications 1 à 8.

10. Système de traitement de session, le système comprenant une entité fonctionnelle de gestion de session (102) et une entité fonctionnelle de gestion de la mobilité (101), dans lequel :
l'entité fonctionnelle de gestion de session (102) est configurée pour envoyer une demande de souscription à un événement à l'entité fonctionnelle de gestion de la mobilité (101) pour souscrire à un événement, dans lequel la demande de souscription à un événement comprend un identifiant d'un équipement utilisateur, UE, et un identifiant d'un réseau local de données, LADN, dans lequel l'événement comprend le fait que l'UE quitte une zone couverte par le LADN, et dans lequel l'identifiant du LADN est un nom de réseau local de données ;
l'entité fonctionnelle de gestion de la mobilité (101) est configurée pour : recevoir la demande de souscription à un événement envoyée par l'entité fonctionnelle de gestion de session (102) ; et, s'il est déterminé que l'UE a quitté la zone couverte par le LADN, envoyer, à l'entité fonctionnelle de gestion de session (102), un premier message de notification pour notifier que l'UE a quitté la zone couverte par le LADN ; et
l'entité fonctionnelle de gestion de session (102) est en outre configurée pour : recevoir le premier message de notification depuis l'entité fonctionnelle de gestion de la mobilité (101), et déclencher une première opération de session sur la base du premier message de notification, dans lequel la première opération de session comprend la libération d'une session LADN ou la désactivation d'une session LADN, et la session LADN est une session utilisée par l'UE pour effectuer une transmission de données dans la zone couverte par le LADN,
dans lequel l'entité fonctionnelle de gestion de session (102) est configurée pour déclencher une première opération de session sur la base du premier message de notification, et elle est en outre **caractérisée par le fait qu'**elle est configurée pour :
si la première opération de session comprend la désactivation de la session LADN, envoyer, à l'entité fonctionnelle de gestion de la mobilité (101), un message pour donner pour instruction de libérer une ressource d'interface radio de la session LADN.

11. Système de traitement de session selon la revendication 10, dans lequel, si la première opération de session comprend la libération de la session LADN, dans lequel l'entité fonctionnelle de gestion de session (102) est configurée pour déclencher une première opération de session sur la base du premier message de notification comprend :
dans lequel l'entité fonctionnelle de gestion de session (102) est configurée pour libérer la session LADN sur la base du premier message de notification.

12. Système de traitement de session selon la revendication 10, dans lequel, si la première opération de session comprend la libération de la session LADN, dans lequel l'entité fonctionnelle de gestion de session (102) est configurée pour déclencher une première opération de session sur la base du premier message de notification comprend :
dans lequel l'entité fonctionnelle de gestion de session (102) est configurée pour déclencher la désactivation de la session LADN sur la base du premier message de notification, et déterminer, au cours d'une durée prédéfinie et selon que l'UE pénètre à nouveau, ou non, dans la zone couverte par le LADN, s'il convient ou non de libérer la session LADN.

13. Système de traitement de session selon la revendication 12, dans lequel l'entité fonctionnelle de gestion de session (102) est configurée pour déterminer, au cours d'une durée prédéfinie et selon que l'UE pénètre à nouveau, ou non, dans zone couverte par le LADN, s'il convient, ou non, de libérer la session LADN comprend :
dans lequel l'entité fonctionnelle de gestion de session (102) est configurée pour libérer la session LADN si l'UE ne pénètre pas à nouveau, au cours de la durée prédéfinie, dans la zone couverte par le LADN ; ou déterminer de ne pas libérer la session LADN si l'UE pénètre à nouveau, au cours de la durée prédéfinie, dans la zone couverte par le LADN.
